# EUROPEAN PATENT APPLICATION

(11) **EP 4 311 198 A1**
(43) Date of publication of application: **24.01.2024**
(21) Application number: 22791136.9
(22) Date of filing: 22.04.2022
(51) Int. Cl.: H04L 47/24, H04W 28/08, H04W 72/04

(54) **COMMUNICATION PROCESSING METHOD FOR DATA TRANSMISSION AND RELATED DEVICE**

(30) Priority: 23.04.2021 CN 202110444576
(71) Applicant: Huawei Technologies Co., Ltd., Longgang Shenzhen, Guangdong 518129 (CN)
(72) Inventor: XU, Xiaoying, Shenzhen, Guangdong 518129 (CN); ZHOU, Guohua, Shenzhen, Guangdong 518129 (CN); WANG, Shaobo, Shenzhen, Guangdong 518129 (CN); MA, Jingwang, Shenzhen, Guangdong 518129 (CN); LOU, Chong, Shenzhen, Guangdong 518129 (CN)
(74) Representative: Pfenning, Meinig & Partner mbB
(86) International application number: PCT/CN2022/088549
(87) International publication number: WO 2022/223031

(57) **Abstract**

Embodiments of this application provide a communication processing method for data transmission. A terminal-side device may adjust transmission of an uplink data burst in time based on time of arriving at an access stratum of the terminal-side device, a maximum peak rate, and a maximum data burst volume that are indicated by a network. This helps adapt to a network resource and improve a network load balancing capability.

## Description

This application claims priority to Chinese Patent Application No. CN202110444576.7, filed on April 23, 2021 and entitled "COMMUNICATION PROCESSING METHOD FOR DATA TRANSMISSION AND RELATED DEVICE", which is incorporated herein by reference in its entirety.

### TECHNICAL FIELD

Embodiments of this application relate to the field of wireless communication, and in particular, to a communication processing technology for data transmission.

### BACKGROUND

A wireless communication system includes a terminal-side device, and an access-network-side device and a core network system that serve the terminal-side device. Based on protocol layer division formulated by the 3rd generation partnership project (3rd generation partnership project, 3GPP) organization, the terminal-side device interacts with the access-network-side device through an access stratum (access stratum, AS), and the terminal-side device interacts with the core network system through a non-access stratum (Non-access stratum, NAS). The access stratum includes: a physical (physical, PHY) layer, a medium access control (medium access control, MAC) layer, a radio link control (radio link control, RLC) layer, a packet data convergence protocol (packet data convergence protocol, PDCP) layer, a radio resource control (radio resource control, RRC) layer, an optional service data adaptation protocol (Service Data Adaptation Protocol, SDAP) layer, and the like. Content carried in signaling of the non-access stratum (which is also referred to as non-access stratum signaling) is not parsed by the access-network-side device, and therefore is transparently transmitted by the access-network-side device to the core network system.

In a wireless communication process, for example, in a communication scenario in which a virtual reality (Virtual Reality, VR) technology is used, data transmission generated by the terminal-side device sometimes has a higher requirement (for example, a delay or a transmission rate). Consequently, some nodes in the wireless communication system may be inadequate in processing capabilities. The data transmission sometimes has a lower requirement. Consequently, some nodes have excess capabilities. Therefore, a load balancing capability of the wireless communication system is poor.

### SUMMARY

Embodiments of this application provide a communication processing method for data transmission, to help improve a load balancing capability of a wireless communication system.

A first aspect of embodiments of this application provides a communication processing method for data transmission, where the method is performed by a terminal-side device. The terminal-side device may be an entire terminal that is sold independently, or may be at least one chip in the terminal or a circuit system that implements the communication processing method in the terminal. The communication processing method includes the following content.

The terminal-side device receives first information, where the first information indicates at least one of the following: adjustment time at which an uplink data burst of the terminal-side device arrives at an access stratum of the terminal-side device, a maximum peak rate that an access-network-side device is allowed to provide for the uplink data burst on an air interface, and a maximum data burst volume that the access-network-side device can bear for the uplink data burst within a packet delay budget of the air interface, the uplink data burst includes at least one data packet that belongs to a same quality of service QoS flow of a same service, and the adjustment time is for staggering, in terms of time, the terminal-side device and a terminal-side device that does not support simultaneous transmission with the terminal-side device or enabling, in an MU-MIMO scenario, the terminal-side device and a terminal-side device MIMO-paired with the terminal-side device to simultaneously perform data transmission; and adjusts data transmission of the uplink data burst based on the first information.

According to the technical solution provided in the first aspect, content indicated by the first information is used by the terminal-side device to perform actual adjustment of the data transmission. The terminal-side device may adjust, in time according to the indication of the first information, the time at which the uplink data burst arrives at the access stratum of the terminal-side device or a transmission rate of the uplink data burst. This helps adapt to a network resource and improve a network load balancing capability.

In a first possible implementation of the first aspect, the first information may be generated by the access-network-side device, and is carried in access stratum signaling from the access-network-side device; and the terminal-side device obtains the first information by using the access stratum signaling, sends the first information to an application layer function for processing the uplink data burst, and adjusts the data transmission of the uplink data burst based on the first information in the application layer function. The access stratum signaling may be RRC signaling, PDCP signaling, RLC signaling, MAC signaling, or PHY layer signaling.

In the first possible implementation, the first information may be directly determined by the access-network-side device, and directly sent to the terminal-side device through an access stratum between the terminal-side device and the access-network-side device. This solution is direct and easy to implement.

In a second possible implementation of the first aspect, the first information may be generated by an application server of the terminal-side device, and is carried in application layer signaling sent by the application server; and the terminal-side device may receive the application layer signaling at an application layer, and adjust the data transmission of the uplink data burst based on the first information in an application layer function for processing the uplink data burst at the application layer.

In the second possible implementation, because the first information is carried in the application layer signaling, the terminal-side device may not consider transmission of the first information at a protocol layer below the application layer. In a communication system, the transmission of the first information does not need to be modified at the protocol layer below the application layer. Impact of this solution on an operating system layer and a wireless network protocol layer below the application layer is small.

In a third possible implementation of the first aspect, the terminal-side device receives access stratum signaling from the access-network-side device, where the access stratum signaling includes second information, and the second information indicates at least one of the following reference information determined by the access-network-side device: reference adjustment time at which the uplink data burst of the terminal-side device arrives at the access stratum of the terminal-side device, a reference maximum peak rate that the access-network-side device is allowed to provide for the uplink data burst on the air interface, and a reference maximum data burst volume that the access-network-side device can bear for the uplink data burst within the packet delay budget of the air interface. The terminal-side device sends non-access stratum signaling to a control plane of a core network system, where the non-access stratum signaling includes the second information, and the second information may be a reference for determining the first information.

In the third possible implementation, the terminal-side device receives the second information at the access stratum, where content indicated by the second information is determined by the access-network-side device. The terminal-side device forwards the second information to the control plane of the core network system by using the non-access stratum signaling. Each node on the control plane of the core network system may refer to the second information, to determine the first information actually used by the terminal-side device. In this solution, the access-network-side device does not decide the first information actually used by the terminal-side device, and the access-network-side device provides reference information for determining the first information. In this solution, the access-network-side device is considered, and the core network system is further considered. The application server controls adjustment of data transmission of the terminal-side device, to improve the network load balancing capability.

In the foregoing implementations, the data burst may be one of a plurality of data bursts in a same periodicity segment in data transmission, for example, the 1^{st} data burst or the last data burst in the same periodicity segment.

A second aspect of embodiments of this application provides a communication processing method for data transmission, where the method is performed by an access-network-side device. The access-network-side device may be an independent base station, or may be at least one chip in the base station or a function module that implements the communication processing method in the base station, for example, a distributed unit (distributed unit, DU) or (central unit, CU) in the base station.

The access-network-side device sends access stratum signaling to a terminal-side device, where the access stratum signaling includes first information. The access-network-side device adjusts data transmission of a data burst based on the first information.

The technical solution provided in the second aspect corresponds to the technical solution provided in the first possible implementation of the first aspect. The access-network-side device directly sends the first information to the terminal-side device by using the access stratum signaling. The access-network-side device and the terminal-side device may adjust the data burst based on the first information. This solution is direct and easy to implement.

A third aspect of embodiments of this application provides a communication processing method for data transmission, where the method is performed by an access-network-side device. The access-network-side device may be an independent base station, or may be at least one chip in the base station or a function module that implements the communication processing method in the base station, for example, a DU or a CU in the base station.

The access-network-side device sends access stratum signaling to a terminal-side device, where the access stratum signaling includes second information. The access-network-side device sends, to a core network system, non-access stratum signaling from the terminal-side device, where the non-access stratum signaling includes the second information. Optionally, the access-network-side device further transparently transmits, to the terminal-side device, application layer signaling sent by an application server of the terminal-side device, where the application layer signaling includes first information, so that the terminal-side device adjusts an uplink data burst based on the first information.

According to the technical solution provided in the third aspect, the access-network-side device uses the expected second information as reference information, sends the expected second information to the core network system through a non-access stratum between the terminal-side device and the core network system, and further forwards the first information generated by the application server of the terminal-side device.

According to the technical solution provided in the third aspect, the access-network-side device provides the reference information for determining the first information. In this solution, the access-network-side device is considered, and the core network system and the application server are further considered. The application server directly controls adjustment of data transmission of the terminal-side device, to improve network load balancing.

A fourth aspect of embodiments of this application provides a communication processing method for data transmission, where the method is performed by an access-network-side device. In the method, the access-network-side device directly sends second information to a control plane of a core network system on an interface between the access-network-side device and the control plane of the core network system. Optionally, the access-network-side device transparently transmits, to a terminal-side device, application layer signaling sent by an application server of the terminal-side device, where the application layer signaling includes first information, and the first information is determined with reference to the second information.

According to the technical solution provided in the fourth aspect, the access-network-side device directly sends the expected second information as reference information to the core network system without forwarding performed by using a non-access stratum of the terminal-side device, and may further forward the first information generated by the application server of the terminal-side device. According to the technical solution provided in the fourth aspect, the access-network-side device provides the reference information for determining the first information. In this solution, the access-network-side device is considered, and the core network system and the application server are further considered. The application server directly controls adjustment of data transmission of the terminal-side device, to improve a network load balancing capability.

A fifth aspect of embodiments of this application provides a communication processing method for data transmission, where the method is performed by a control plane of a core network system, and the method mainly includes the following content.

The control plane of the core network system receives second information, and sends the second information or updated information of the second information to an application server of a terminal-side device.

According to the technical solution provided in the fifth aspect, the control plane of the core network system receives the second information, and may directly forward the second information to the application server of the terminal-side device, or may update the second information and send the updated information of the second information to the application server. The control plane of the core network system may update, based on the second information, reference adjustment time, a reference peak rate, or a reference maximum data burst volume that is indicated by the second information, and then send updated reference adjustment time, an updated reference peak rate, or an updated reference maximum data burst volume to the application server. According to the technical solution provided in the fifth aspect, the control plane of the core network system may send the reference information indicated by the second information or the updated information of the second information to the application server, so that the application server adjusts data transmission of an uplink data burst. The second information may be generated and directly sent to the control plane of the core network system by an access-network-side device, or may be generated and sent to the terminal-side device by the access-network-side device and then sent to the control plane of the core network system via non-access stratum signaling of the terminal-side device.

In a first possible implementation of the fifth aspect, the control plane of the core network system receives first information sent by the application server, and sends the first information to the terminal-side device, so that the terminal-side device adjusts data transmission of an uplink data burst.

In a second possible implementation of the fifth aspect, the control plane of the core network system includes an SMF, the updated information of the second information is first updated information, and the first updated information is information obtained by updating the second information by the SMF. In this case, the SMF may send the first updated information or forward the second information to the application server directly or via another core network device such as at least one of a PCF, an NEF, and an AF.

In a third possible implementation of the fifth aspect, the control plane of the core network system includes an SMF and a PCF, the updated information of the second information is first updated information or second updated information, and the second updated information is information obtained by updating the second information by the PCF or information obtained by updating the first updated information by the PCF. In this case, the SMF receives the second information from an access-network-side device; and may update the second information to obtain the first updated information, and send the first updated information; or may directly forward the second information. The PCF may forward, to the application server directly or via an NEF or an AF, the second information or the first updated information that is sent by the SMF, or may update the second information or the first updated information from the SMF to obtain the second updated information and then send the second updated information.

In a fourth possible implementation of the fifth aspect, the control plane of the core network system includes an SMF, a PCF, and an NEF, the updated information of the second information is first updated information, second updated information, or third updated information, and the third updated information is information obtained by updating the second information by the NEF, information obtained by updating the first updated information by the NEF, information obtained by updating the second updated information by the NEF, or information obtained by updating the third updated information by the NEF. If the PCF sends the second information to the NEF, the NEF may directly forward the second information to the application server, or may update the second information to obtain the third updated information and then send the third updated information to the application server. If the PCF sends the first updated information to the NEF, the NEF may directly forward the first updated information to the application server, or may update the first updated information to obtain the third updated information and then send the third updated information to the application server. If the PCF sends the second updated information to the NEF, the NEF may forward the second updated information to the application server directly or via an AF, or may update the second updated information to obtain the third updated information and then send the third updated information to the application server. Optionally, the AF receives the second information or the updated information of the second information that is sent by the NEF, and directly forwards the second information or the updated information of the second information to the application server, or may update the second information or the updated information of the second information and then forward updated information to the application server.

In the foregoing possible implementations of the fifth aspect, each node in the core network system may directly forward information sent by a previous node, or may update the information and then send updated information to a next node, so that each node has an opportunity to participate in adjustment of data transmission. This helps further improve a network load balancing capability.

A sixth aspect of embodiments of this application provides a communication processing method for data transmission, where the method is provided by an access-network-side device. In the method, the access-network-side device sends third information to a control plane of a core network system, where the third information indicates at least one of the following reference information determined by the access-network-side device: reference adjustment time at which an application server of a terminal-side device sends a downlink data burst, a reference maximum peak rate that the access-network-side device is allowed to provide for the downlink data burst on an air interface, and a reference maximum data burst volume that the access-network-side device can bear for the downlink data burst within a packet delay budget of the air interface, and the downlink data burst includes at least one data packet that belongs to a same quality of service QoS flow of a same service. The access-network-side device sends the third information to the control plane of the core network system; and receives the downlink data burst sent by the application server of the terminal-side device, and sends the downlink data burst to the terminal-side device. Optionally, the access-network-side device directly sends the third information to the control plane of the core network system on an interface between the access-network-side device and the control plane of the core network system, or first sends the third information to the terminal-side device by using access stratum signaling, and then the terminal-side device sends the third information to the control plane of the core network system via non-access stratum signaling.

According to the technical solution provided in the sixth aspect, the access-network-side device may send, to the control plane of the core network system, the expected reference information for adjusting data transmission of the downlink data burst, so that the core network system and the application server of the terminal-side device adjust the downlink data burst, to improve a network load balancing capability.

A seventh aspect of embodiments of this application provides a communication processing method performed by a control plane of a core network system. In the method, the control plane of the core network system receives third information from an access-network-side device, where the third information indicates at least one of the following reference information determined by the access-network-side device: reference adjustment time at which an application server of a terminal-side device sends a downlink data burst, a reference maximum peak rate that the access-network-side device is allowed to provide for the downlink data burst on an air interface, and a reference maximum data burst volume that the access-network-side device can bear for the downlink data burst within a packet delay budget of the air interface, and the downlink data burst includes at least one data packet that belongs to a same quality of service QoS flow of a same service. The control plane of the core network system sends the third information or updated information of the third information to the application server of the terminal-side device; and receives the downlink data burst sent by the application server of the terminal-side device, and sends the downlink data burst to the access-network-side device.

According to the technical solution provided in the seventh aspect, the control plane of the core network system may send the reference information indicated by the third information or the updated information of the third information to the application server, so that the application server adjusts downlink data transmission, to improve a network load balancing capability.

In a first possible implementation of the seventh aspect, the control plane of the core network system includes an SMF, the updated information of the third information is fifth updated information, and the fifth updated information is information obtained by updating the third information by the SMF. In this case, the SMF may send the fifth updated information or forward the third information to the application server directly or via another core network device such as at least one of a PCF, an NEF, and an AF.

In a second possible implementation of the seventh aspect, the control plane of the core network system includes an SMF and a PCF, the updated information of the third information is fifth updated information or sixth updated information, and the sixth updated information is information obtained by updating the third information by the PCF or information obtained by updating the fifth updated information by the PCF. In this case, the SMF receives the third information from the access-network-side device; and may update the third information to obtain the fifth updated information, and send the fifth updated information; or may directly forward the third information. The PCF may forward, to the application server directly or via an NEF or an AF, the third information or the fifth updated information that is sent by the SMF, or may update the third information or the fifth updated information from the SMF to obtain the sixth updated information and then send the sixth updated information.

In a third possible implementation of the seventh aspect, the core network system includes an SMF, a PCF, and an NEF, the updated information of the third information is fifth updated information, sixth updated information, or seventh updated information, and the seventh updated information is information obtained by updating the third information by the NEF, information obtained by updating the fifth updated information by the NEF, or information obtained by updating the sixth updated information by the NEF. If the PCF sends the third information to the NEF, the NEF may directly forward the third information to the application server, or may update the third information to obtain the seventh updated information and then send the seventh updated information to the application server. If the PCF sends the fifth updated information to the NEF, the NEF may directly forward the fifth updated information to the application server, or may update the fifth updated information to obtain the seventh updated information and then send the seventh updated information to the application server. If the PCF sends the sixth updated information to the NEF, the NEF may forward the sixth updated information to the application server directly or via an AF, or may update the sixth updated information to obtain the seventh updated information and then send the seventh updated information to the application server. Optionally, the AF receives the third information or updated information of the third information that is sent by the NEF, and directly forwards the third information or the updated information of the third information to the application server, or may update the third information or the updated information of the third information and then forward updated information to the application server.

In the foregoing possible implementations of the seventh aspect, each node in the core network system may directly forward information sent by a previous node, or may update the information and then send updated information to a next node, so that each node has an opportunity to participate in adjustment of the downlink data transmission. This helps further improve the network load balancing capability.

An eighth aspect of embodiments of this application provides a terminal-side device. The terminal-side device includes a transceiver unit and a processing unit. The transceiver unit may be divided into a receiving unit and a sending unit. The transceiver unit is configured to perform receiving and sending actions in any one of the first aspect to the possible implementations of the first aspect. The processing unit is configured to perform a processing action such as determining in any one of the first aspect to the possible implementations of the first aspect. During specific physical implementation, the transceiver unit may be a transceiver circuit or a transceiver, and may include a receiver and a transmitter. The processing unit may be a processing circuit or a processor. Optionally, the terminal-side device may be a terminal device that is sold independently, or may be a chip or a circuit system in the terminal device. The chip or the circuit system includes a plurality of gate circuits to implement functions of the foregoing functional units. The communication apparatus provided in the eighth aspect may implement beneficial effects achieved in any one of the first aspect to the possible implementations of the first aspect. Details are not described again.

A ninth aspect of embodiments of this application provides an access-network-side device. The access-network-side device includes a sending unit, a processing unit, and a receiving unit. The sending unit and the receiving unit are respectively configured to perform sending and receiving actions in any one of the second aspect, the third aspect, and the fourth aspect. The processing unit is configured to perform a processing action such as adjustment in any one of the second aspect, the third aspect, and the fourth aspect. During specific physical implementation, the sending unit may be a transmitter, and the receiving unit may be a receiver. Optionally, the access-network-side device may be a base station that is sold independently, or may be a hardware entity split from the base station, for example, a distributed unit (distributed unit, DU) or (central unit, CU), or may be a chip or a circuit system in the base station. The chip or the circuit system includes a plurality of gate circuits to implement functions of the foregoing functional units. The communication apparatus provided in the ninth aspect may implement beneficial effects achieved in either of the second aspect and the third aspect. Details are not described again.

A tenth aspect of embodiments of this application provides a control plane of a core network system. The control plane of the core network system includes a first receiving apparatus, a second receiving apparatus, and a sending apparatus. The first receiving apparatus and the second receiving apparatus are configured to perform a receiving action performed by the control plane of the core network system in the fifth aspect or the seventh aspect, and the sending apparatus is configured to perform a sending action performed by the control plane of the core network system.

In a first possible implementation of the tenth aspect, the first receiving apparatus, the sending apparatus, and the second receiving apparatus are all SMFs; the first receiving apparatus is an SMF, the sending apparatus is a PCF, and the second receiving apparatus is an SMF or a PCF; the first receiving apparatus is an SMF, the sending apparatus is an NEF, and the second receiving apparatus is an SMF, a PCF, or an NEF; or the first receiving apparatus is an SMF, the sending apparatus is an AF, and the second receiving apparatus is an SMF, a PCF, an NEF, or an AF.

According to a technical solution provided in the first possible implementation of the tenth aspect, it is clear that each node in the core network system may directly forward information sent by a previous node, or may update the information and then send updated information to a next node, so that each node has an opportunity to participate in adjustment of data transmission. This helps improve a network load balancing capability.

An eleventh aspect of embodiments of this application provides a communication processing apparatus, including a processor and a memory. The memory stores a computer program. When the computer program is invoked by the processor, the communication processing apparatus is enabled to implement the method according to any one of the first aspect, the second aspect, the third aspect, the fourth aspect, the fifth aspect, the sixth aspect, the seventh aspect, and the possible implementations of the first aspect, the second aspect, the third aspect, the fourth aspect, the fifth aspect, the sixth aspect, and the seventh aspect. Optionally, the communication processing apparatus provided in the eleventh aspect may be a chip system, or may be an independently sold device including the chip system.

A twelfth aspect of embodiments of this application provides a computer-readable storage medium. The computer-readable storage medium stores a computer program. The computer program is invoked by a computer to implement the method according to any one of the first aspect, the second aspect, the third aspect, the fourth aspect, the fifth aspect, the sixth aspect, the seventh aspect, and the possible implementations of the first aspect, the second aspect, the third aspect, the fourth aspect, the fifth aspect, the sixth aspect, and the seventh aspect. The computer-readable storage medium provided in the twelfth aspect may be included in a chip system, or may be an independently sold device including the chip system.

A thirteenth aspect of embodiments of this application provides a computer program product. The computer program product includes a computer program that implements the method according to any one of the first aspect, the second aspect, the third aspect, the fourth aspect, the fifth aspect, the sixth aspect, the seventh aspect, and the possible implementations of the first aspect, the second aspect, the third aspect, the fourth aspect, the fifth aspect, the sixth aspect, and the seventh aspect when being invoked by a computer. The computer program product provided in the thirteenth aspect may be computer software code, and may be included in a chip system or an independently sold device including the chip system.

### BRIEF DESCRIPTION OF DRAWINGS

FIG. 1A and FIG. 1B each are a schematic diagram of an architecture of a communication system according to an embodiment of this application;
FIG. 2 is a schematic diagram of protocol layer division of an architecture of a communication system according to an embodiment of this application;
FIG. 3 is a schematic diagram of video frame transmission according to an embodiment of this application;
FIG. 4 is a schematic diagram of video frame transmission according to an embodiment of this application;
FIG. 5 is a schematic flowchart of a communication processing method for data transmission according to an embodiment of this application;
FIG. 6 is a schematic flowchart of a communication processing method for data transmission according to an embodiment of this application;
FIG. 7 is a schematic flowchart of a communication processing method for data transmission according to an embodiment of this application;
FIG. 8 is a schematic flowchart of a communication processing method for data transmission according to an embodiment of this application;
FIG. 9 is a schematic flowchart of a communication processing method for data transmission according to an embodiment of this application;
FIG. 10 is a schematic flowchart of a communication processing method for data transmission according to an embodiment of this application;
FIG. 11 is a schematic diagram of a unit structure of a communication processing apparatus according to an embodiment of this application;
FIG. 12 is a schematic diagram of an entity structure of a communication processing apparatus according to an embodiment of this application; and
FIG. 13 is a schematic diagram of a composition structure of a core network system according to an embodiment of this application.

### DESCRIPTION OF EMBODIMENTS

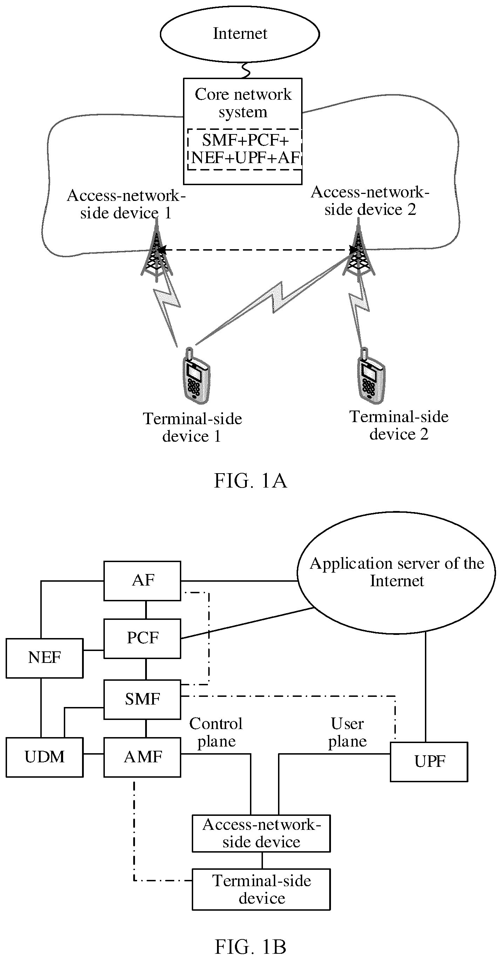

A communication system shown in FIG. 1A includes terminal-side devices, access-network-side devices, and a core network system. The access-network-side device may be various transmission reception points (transmission reception points, TRPs) such as a base station, a wireless local area network access point, and a relay node, and provides an access service in a licensed spectrum or an access service in an unlicensed spectrum for the terminal-side device. The access-network-side device is connected to the core network system in a wired or wireless manner. The terminal-side device includes user equipment (User Equipment, UE), and is a device providing voice and/or data connectivity for a user, for example, a handheld device or a vehicle-mounted device that has a wireless connection function. A common terminal-side device includes, for example, a mobile phone, a tablet computer, a notebook computer, a palmtop computer, a mobile internet device (mobile internet device, MID), and a wearable device, for example, a smartwatch, a smart band, a pedometer, and various types of user equipment in a virtual reality technology. For the terminal-side device, one access-network-side device may provide a communication service, or at least two access-network-side devices may simultaneously provide a communication service by using a dual connectivity technology.

The terminal-side device and the access-network-side device respectively transmit uplink data and downlink data on an air interface based on a protocol layer in an uplink and a downlink. The access-network-side device may be used as an independent device, or may be split into different devices based on the protocol layer. For example, after the access-network-side device is split based on the protocol layer, the access-network-side device may include one central unit (central unit, CU) and at least one distributed unit (distributed unit, DU). The CU is configured to implement functions of the access-network-side device at a PDCP layer, an RRC layer, and a protocol layer above the RRC layer. The DU is configured to implement functions of the access-network-side device at an RLC layer, a MAC layer, and a PHY layer. A person skilled in the art may understand that, in the following implementations, the function of the access-network-side device at the PDCP layer, the RRC layer, or the protocol layer above the RRC layer may be performed by the CU, and the function of the access-network-side device at the RLC layer, the MAC layer, or the PHY layer is performed by the at least one DU.

FIG. 1B shows a control plane and a user plane of a core network system defined by the 3rd generation partnership project (3GPP) organization. The control plane of the core network system includes an access and mobility management function (Access and Mobility Management Function, AMF) entity, a session management function (Session Management Function, SMF) entity, a policy control function (Policy Control Function, PCF) entity, a network exposure function (Network Exposure Function, NEF) entity, an application function (application function, AF) entity, and a unified data management (Unified Data Management, UDM) entity. The user plane of the core network system includes a user plane function (User Plane Function, UPF) entity. The SMF entity is configured to perform management functions, for example, allocate an internet protocol (IP) address to a terminal-side device, select a UPF entity that serves the terminal-side device, and perform charging and quality of service (QoS) policy control on the terminal-side device. The UPF entity acts as an anchor of the user plane, and is configured to perform specific forwarding for data transmission of the terminal-side device in a communication system, and generate a bill based on a traffic status of the data transmission. The PCF entity is configured to charge for the data transmission of the terminal-side device. The NEF entity is configured to expose a capability of a 3GPP network to a network manager (for example, an operator), and receive a management policy provided by the network manager. The AF entity is configured to exchange application layer signaling between the control plane of the core network system and an application server in the Internet. The AMF entity is configured to exchange signaling between the control plane of the core network system and an access network device, and receive all connection and session related information from user equipment, but is only responsible for processing a connection and mobility management task and forwarding all messages related to session management to the SMF entity. The UDM entity is configured to perform unified data management, for example, manage subscription data and information about an openness capability.

The communication systems shown in FIG. 1A and FIG. 1B may be connected to the Internet in a wired or wireless manner. The Internet includes application servers that provide various content services (for example, multimedia movies and music). The terminal-side device may perform data transmission with the application servers by using a corresponding application layer function at an application layer, where the application layer function is also referred to as an application program.

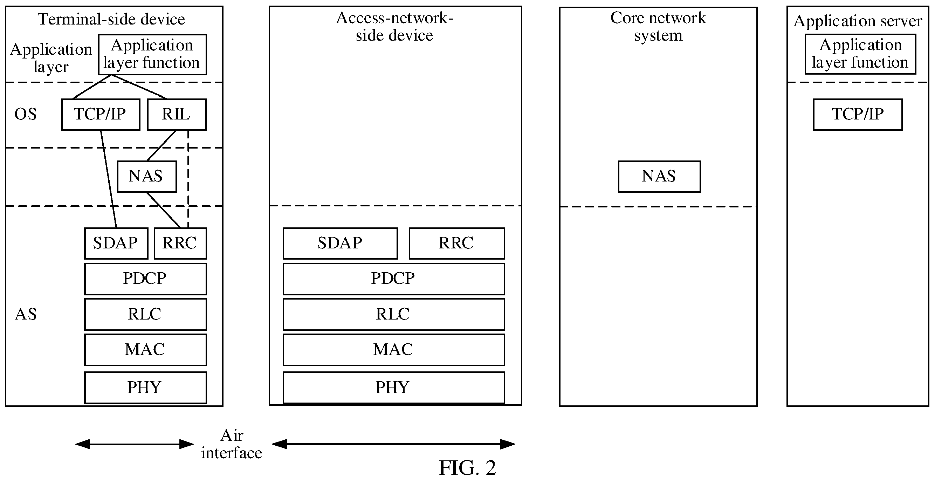

Communication systems shown in FIG. 1A, FIG. 1B, and FIG. 2 may be wireless communication systems such as a new radio (New Radio, NR) system (which is also referred to as a 5G system), an LTE (long term evolution, LTE) system, and a long term evolution-advanced (long term evolution-advanced, LTE-A) system.

Based on FIG. 1A and FIG. 1B, FIG. 2 further clarifies an architecture of the communication system divided based on the protocol layer. The terminal-side device includes an access stratum that is a peer of the access-network-side device, a non-access stratum that is a peer of the core network system, an operating system (operating system, OS) layer, and the application layer.

The peer access stratum is divided into a control plane and a user plane. The control plane includes the RRC layer, the PDCP layer, the RLC layer, the MAC layer, and the PHY layer. The user plane includes an SDAP layer, the PDCP layer, the RLC layer, the MAC layer, and the PHY layer. The operating system layer includes a transmission control protocol/internet protocol (Transmission Control Protocol/Internet Protocol, TCP/IP) layer and a radio interface layer (radio interface layer, RIL) layer. The application layer of the terminal-side device may directly communicate with the RRC layer through the RII, layer, may communicate with the RRC layer through the non-access stratum, may communicate with another entity on the access stratum through the non-access stratum, or may directly communicate with another entity on the access stratum. A function of at least one protocol layer in the access stratum may be integrated into a modem, and the modem may be an independent modem chip. A channel between the PDCP layer and the RLC layer is referred to as an RLC channel, a channel between the RLC layer and the MAC layer is referred to as a logical channel, a channel between the MAC layer and the PHY layer is referred to as a transmission channel, and a physical channel is below the PHY layer. Common physical channels include a physical uplink control channel (physical uplink control channel, PUCCH), a physical downlink control channel (physical downlink control channel, PDCCH), a physical uplink shared channel (physical uplink shared channel, PUSCH), and a physical downlink shared channel (physical downlink shared channel, PDSCH).

In embodiments of this application, from a perspective of physical implementation, the access-network-side device may be the base station, the wireless local area network access point, or the like, or may be a chip or a circuit system in the base station or the wireless local area network access point; and the terminal-side device may be the user equipment, or a chip or a circuit system in the user equipment.

In embodiments of this application, data transmission between the terminal-side device and the access-network-side device may be performed in a form of a data burst. One data burst is a set of at least one data packet that belongs to a same QoS flow of a same service.

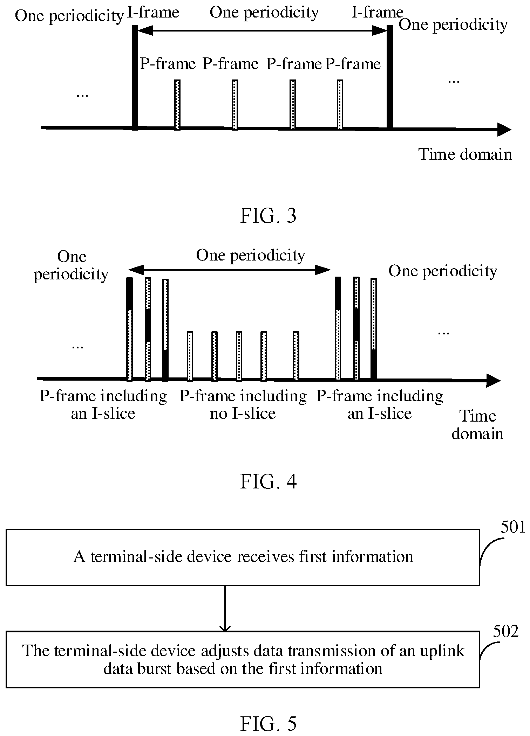

In the video field, for example, data transmission generated by using a VR technology, one video frame includes at least one data burst, and the data burst includes the at least one data packet of the same QoS flow of the same service. The video frame may be based on a group of picture (group of picture, GOP) video coding technology shown in FIG. 3 or based on a gradual decoding refresh (gradual decoding refresh, GDR) video coding technology shown in FIG. 4.

In the GOP video coding technology, the video frame may be an intra-picture (intra-Picture, I)-frame, or may be a predictive-picture (predictive-picture, P)-frame or a B-frame.

The I-frame is actually a data frame obtained by compressing a complete video. Because the I-frame describes details of the complete video, the I-frame may be independently decoded to be reconstructed into the complete video. In a video coding sequence, the I-frame appears periodically, and a distance between two adjacent I-frames is one periodicity, which is also referred to as a GOP value.

The P-frame cannot be independently decoded, and is decoded by referring to a nearby I-frame or another P-frame. Assuming that basic experience of a video of 4K resolution is a 35-Mbps bit rate and 60 frames per second (fps), one I-frame is generated from the video every 1 to 2 seconds, one P-frame is generated every 16.7 milliseconds, and a video size of the 1-frame is approximately 10 times that of the P-frame. Regardless of the I-frame or the P-frame, a video of a frame may be correctly decoded only when all data packets in the frame are correctly received within an expected delay. The expected delay is also referred to as a packet delay budget in the wireless communication system.

The B-frame is a bidirectional predictive picture frame. When the B-frame is decoded, both a nearly video frame (for example, an I-frame or a P-frame) before the B-frame and a video frame (for example, a P-frame) after the B-frame need to be referred to.

In the GDR video coding technology, a video coding sequence includes only a P-frame but no periodic I-frame. In other words, a large I-frame video is sliced into a plurality of P-frames, so that a volume of data to be processed in unit time becomes smooth. A video slice refers to an area of a video. There are two types of frames in the plurality of P-frames. A first type of P-frame includes information about two video slices. A first video slice is referred to as an I-slice, and may be independently decoded to be reconstructed into a video. A second video slice is referred to as a P-slice, cannot be independently decoded, and may be reconstructed into a video only by referring to the first video slice and a previous P-frame.

To improve user experience, for example, in the VR field, the data transmission generated by the terminal-side device sometimes has a higher requirement and sometimes has a lower requirement. This imposes a high requirement on a network load balancing capability.

In view of the foregoing problem, a first embodiment of this application provides a communication processing method for data transmission. In a schematic diagram of system interaction shown in FIG. 5, the following content is included.

501: A terminal-side device receives first information.

The first information may indicate at least one of the following:
(1) Adjustment time at which an uplink data burst of the terminal-side device arrives at an access stratum of the terminal-side device

The adjustment time may be time at which one (for example, the first data packet or the last data packet) of at least one data packet included in the uplink data burst arrives at the access stratum of the terminal-side device.

Optionally, the time of arriving at the access stratum may be considered as time at which the data packet (for example, the first data packet or the last data packet) is sent from an application layer of the terminal-side device, for example, time at which the application layer of the terminal-side device sends the data packet to an operating system of the terminal-side device or the access stratum. Optionally, the time of arriving at the access stratum is time at which the data packet (for example, the first data packet or the last data packet) arrives at an SDAP layer, a PDCP layer, an RLC layer, a MAC layer, or a physical layer in the access stratum.

Optionally, the time of arriving at the access stratum is time at which the data packet (for example, the first data packet or the last data packet) is sent from the SDAP layer, the PDCP layer, the RLC layer, the MAC layer, or the physical layer in the access stratum.

It should be noted that, for a same data packet, a deviation between time at which the data packet is sent from one of the foregoing protocol layers and time at which the data packet arrives at a next protocol layer of the protocol layer may not be considered. In this case, the time at which the data packet is sent from the protocol layer is equal to the time at which the data packet arrives at the next protocol layer of the protocol layer. For example, for the same data packet, time at which the data packet arrives at the PDCP layer is approximately equal to time at which the data packet is sent from the SDAP layer.

The first information may indicate the adjustment time in a form of a time offset. Assuming that the data burst is periodic, the first information indicates to perform data transmission of the uplink data burst by advancing or delaying the data transmission by the time offset in a configured periodicity. A measurement unit of the time offset may be millisecond ms, microsecond µs, or nanosecond ns.

The first information may alternatively indicate the adjustment time in a form of absolute time. For example, time-serving time of a clock type such as a UTC (Coordinated Universal Time, coordinated universal time) clock, a local clock, or a satellite navigation system clock, for example, a GPS (Global Positioning System, global positioning system) clock, is used. In this case, the first information indicates to perform data transmission of the data burst at the indicated absolute time. A relative origin of GPS time is 00:00:00 on January 6, 1980 in the Gregorian calendar, and even fine to 20 microseconds and 10 nanoseconds. A time-serving difference between UTC time and the GPS time is several seconds.

Optionally, the first information further includes a clock type of the absolute time, to indicate whether to use the satellite navigation system clock, the UTC clock, or the local clock.

To ensure time synchronization between the terminal-side device and another node in a communication system, an access-network-side device may periodically send calibration time to the terminal-side device, so that the terminal-side device has a consistent understanding with the access-network-side device on the adjustment time indicated by the first information.

(2) Maximum peak rate that the access-network-side device is allowed to provide for the uplink data burst on an air interface or maximum data volume that is of the uplink data burst in a periodicity and that the access-network-side device is allowed to provide on the air interface

Optionally, the first information indicates the maximum peak rate on the air interface, so that the uplink data burst of the terminal-side device does not exceed the maximum peak rate when being transmitted. The maximum peak rate represents a maximum bit rate of transmission from a physical antenna port at the physical layer in the unit time, or represents a maximum bit rate of data received from the application layer at the PDCP layer in the unit time. In the video field, the maximum peak rate may be a maximum flow bit rate (maximum flow bit rate, MFBR), to represent a maximum bit rate expected by a QoS flow to which the data burst belongs; and transmission of bit load that exceeds the maximum bit rate is to be canceled or delayed by the terminal-side device, the access-network-side device, or a core network system.

In the video field, the maximum peak rate usually depends on a rate of an I-frame or a P-frame including an I-slice, the rate of the I-frame or the P-frame including the I-slice indicates video quality of the I-frame or the P-frame including the I-slice, and high video quality of the I-frame or the P-frame including the I-slice means that more time-frequency resources are occupied. A maximum peak rate that is of a video frame and that is determined on the air interface in a periodicity of the video frame is equal to a size of the video frame divided by the periodicity of the video frame. The maximum peak rate is adjusted, which helps resource control of the access-network-side device and implement load balancing.

The maximum peak rate that the access-network-side device is allowed to provide for the uplink data burst on the air interface may be described as the maximum data volume that is of the uplink data burst in the periodicity (for example, 16.6 milliseconds or 8.33 milliseconds) and that the access-network-side device is allowed to provide on the air interface. In this case, the video frame is used as an example. A maximum volume of data that can be transmitted by the access-network-side device on the air interface in the periodicity of the video frame is a maximum data volume of the video frame.

(3) Maximum data burst volume that the access-network-side device can bear for the uplink data burst within a packet delay budget of the air interface

The maximum data burst volume (maximum data burst volume, MDBV) refers to the maximum data volume that can be borne for the uplink data burst within the packet delay budget. The packet delay budget is predetermined time within which transmission of a data burst is expected to be completed. For example, if the packet delay budget of the uplink data burst is assumed to be 10 milliseconds, and a maximum volume of uplink data that can be transmitted by the access-network-side device within the 10 milliseconds is 5 megabits, the packet delay budget is 10 ms corresponding to the maximum data burst volume, namely, 5 megabits.

502: The terminal-side device adjusts the data transmission of the uplink data burst based on the first information.

The terminal-side device may determine, based on the received first information, an application layer function for processing the data burst at the application layer, and adjust the data transmission of the uplink data burst according to the indication of the first information at the application layer. The terminal-side device may adjust, at the application layer (where the application layer function is specifically used), time at which the uplink data burst arrives at the access stratum, and a transmission rate and a data volume that are of the uplink data burst.

A specific operation of adjusting the transmission rate of the uplink data burst may be: determining the maximum data volume of the uplink data burst in the periodicity of the uplink data burst, then determining, by the application layer of the terminal-side device, a video coding parameter of the video frame, and adjusting the transmission rate by adjusting the video coding parameter.

Optionally, before 501, in a process in which the terminal-side device accesses the access-network-side device, a control plane of the core network system may send a QoS requirement of a QoS flow to the access-network-side device, where the QoS requirement includes information such as a packet delay budget, a guaranteed bit rate, and a packet error rate. If the access network side provides an access service for the terminal-side device based on the QoS requirement, access of the terminal-side device is admitted, and a data radio bearer that carries the QoS flow is established with the terminal-side device.

According to the technical solution provided in the first embodiment, the terminal-side device receives, from a wireless network, the first information for adjusting the uplink data burst. This helps the terminal-side device adjust the data transmission of the uplink data burst in time under control of the wireless network, thereby improving a load balancing capability of an entire communication system.

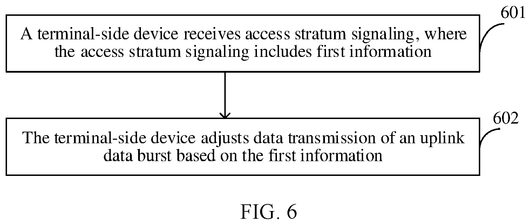

A second embodiment of this application provides a communication processing method for data transmission, as shown in FIG. 6. The method provided in the second embodiment is further detailed descriptions of the first embodiment.

S600: An access-network-side device determines to adjust data transmission of an uplink data burst of an uplink service of a terminal-side device.

Optionally, the access-network-side device may collect statistics about characteristic information of the uplink service of the terminal-side device in a time period, for example, transmission time of the uplink service, a periodicity of the uplink service, and a data volume of a data burst in each periodicity. The periodicity of the uplink service is a periodicity of one video frame, and the video frame further includes at least one uplink data burst. Therefore, the periodicity of the video frame is equal to a periodicity of any one of the at least one uplink data burst. That is, the periodicity of the uplink data burst is equal to the periodicity of the uplink service. Optionally, the access-network-side device may receive the characteristic information that is of the uplink service and that is sent by the terminal-side device or a core network system. If a data volume change of the uplink data burst of the terminal-side device exceeds a threshold in a same time period, it is considered that the data transmission of the uplink data burst needs to be adjusted. As described above, in the video field, an I-frame and a P-frame, or a P-frame including an I-slice and a P-frame including no I-slice may both include at least one data burst.

Optionally, when the access-network-side device serves at least two terminal-side devices, the two terminal-side devices are used as an example. If transmission time of uplink data bursts of the two terminal-side devices are the same or approximate (for example, less than a threshold), but uplink requirements, for example, transmission delays, of the two terminal-side devices cannot be ensured due to an inadequate resource, the access-network-side device considers that data transmission of the uplink data burst of either of the two terminal-side devices or data transmission of the uplink data bursts of both of the two terminal-side devices needs to be adjusted.

Optionally, to improve resource utilization efficiency, the access-network-side device may select a terminal-side device 1 and a terminal-side device 2 that have good signal quality and low MIMO channel correlation to perform multi-user multiple-input multiple-output (MU-MIMO) pairing. If transmission of uplink data bursts of the two terminal-side devices cannot be implemented on a same uplink channel (for example, a PUSCH) when arrival time of the uplink data bursts of the two terminal-side devices is different or has a large interval, the access-network-side device considers that data transmission of the uplink data burst of either of the two terminal-side devices or data transmission of the uplink data bursts of both of the two terminal-side devices needs to be adjusted, so that the two terminal-side devices perform spatial multiplexing to perform uplink data transmission simultaneously (for example, a same PUSCH resource).

Optionally, when two terminal-side devices cannot be served simultaneously (for example, a same PUSCH resource) because a radio resource of the access-network-side device is limited, if transmission of uplink data bursts of the two terminal-side devices cannot be completed within transmission delay budgets of the uplink data bursts of the two terminal-side devices when arrival time of the uplink data bursts of the two terminal-side devices is the same or has an interval less than a threshold, the access-network-side device determines to adjust data transmission of the uplink data burst of either of the two terminal-side devices or data transmission of the uplink data bursts of both of the two terminal-side devices.

Optionally, if arrival time of the uplink data burst of the terminal-side device is delayed to a next available time division multiplexing (TDD) uplink sending occasion because the arrival time is on a downlink sending occasion of a TDD system, and this causes a case in which transmission of uplink data bursts of two terminal-side devices cannot be completed within transmission delay budgets of the uplink data bursts of the two terminal-side devices when sending time of the uplink service of the terminal-side device and sending time of an uplink service of the other terminal-side device is the same or has an interval less than a threshold and the two terminal-side devices cannot be served simultaneously (for example, a same PUSCH resource) because a radio resource of the access network device is limited, the access-network-side device determines to adjust data transmission of the uplink data burst of either of the two terminal-side devices or data transmission of the uplink data bursts of both of the two terminal-side devices. Definitely, it is also possible that arrival time of uplink bursts of two terminals is on the downlink sending occasion of the TDD system, and needs to be delayed to the next available TDD uplink sending occasion. This also has a similar problem.

Optionally, the access-network-side device may determine that a maximum peak rate of a service to which an uplink data burst of a service belongs, a maximum data volume of the uplink data burst in a periodicity, or a maximum data burst volume exceeds a preset threshold, thereby determining to adjust data transmission of the uplink data burst of the service.

The access-network-side device may determine adjustment time at which the uplink data burst arrives at an access stratum of the terminal-side device. In addition, the access-network-side device may determine a maximum peak rate that the access-network-side device is allowed to provide for the uplink data burst on an air interface, the maximum data volume of the uplink data burst in the periodicity, and a maximum data burst volume that the access-network-side device can bear for the uplink data burst within a packet delay budget of the air interface, to adjust the data transmission of the uplink data burst of the service.

Optionally, the access-network-side device may determine an identifier of a logical channel for transmitting the uplink data burst, a session to which the uplink data burst belongs, and a QoS flow to which the uplink data burst belongs.

S601: The access-network-side device sends access stratum signaling to the terminal-side device, where the access stratum signaling includes first information. Accordingly, the terminal-side device receives the access stratum signaling at the access stratum. Optionally, the first information may be generated by the access-network-side device.

Optionally, when the access-network-side device is in a CU-DU split architecture, the first information may be generated by a DU in the access-network-side device. The DU may send the first information to the terminal-side device via MAC layer signaling or physical layer signaling in the access stratum signaling. Alternatively, the DU may send the first information to a CU through an F1 interface, and then the CU sends the first information to the terminal-side device via PDCP signaling or RRC signaling in the access stratum signaling.

Optionally, the access stratum signaling further includes information that indicates the logical channel for transmitting the uplink data burst, for example, the identifier of the logical channel. The logical channel is a channel between a MAC protocol layer and an RLC protocol layer at the access stratum. The logical channel may clarify a priority of a service to which the uplink data burst belongs between the MAC protocol layer and the RLC protocol layer, so that sequential transmission of the uplink data burst and another uplink data burst can be controlled sequentially.

Optionally, the access stratum signaling further includes an identifier of the session (session) to which the uplink data burst belongs and an identifier of the QoS flow to which the uplink data burst belongs, to indicate to adjust the data transmission of the uplink data burst of the QoS flow in the session. The session may be a PDU session to which the uplink data burst belongs, and the QoS flow is the QoS flow to which the uplink data burst belongs. Optionally, the identifier of the session or the identifier of the QoS flow is protocol-specific. It indicates, only when the access stratum signaling includes the protocol-specific identifier of the session or the protocol-specific identifier of the QoS flow, that the data transmission of the uplink data burst that belongs to the QoS flow in the session is allowed to be adjusted. Optionally, the access stratum signaling further includes the session to which the uplink data burst belongs. If the access stratum signaling carries an identifier of the session but does not carry an identifier of the QoS flow to which the uplink data burst belongs, it indicates to adjust data transmission of all uplink data bursts in the session.

Optionally, the access stratum signaling does not include an identifier of the session to which the uplink data burst belongs or an identifier of the QoS flow to which the uplink data burst belongs. In a possible implementation, the terminal-side device may determine whether the QoS flow to which the uplink data burst belongs or the session to which the uplink data burst belongs is predefined in a protocol. If yes, it indicates that the data transmission of the uplink data burst is allowed to be adjusted; or if no, it indicates that the data transmission of the uplink data burst is not allowed to be adjusted. In another possible implementation, the terminal-side device determines whether a maximum peak rate of the data transmission of the uplink data burst, a maximum data volume of the uplink data burst in a periodicity, or a maximum data burst volume exceeds a preset threshold. If yes, it indicates that the data transmission of the uplink data burst is allowed to be adjusted; or if no, it indicates that the data transmission of the uplink data burst is not allowed to be adjusted.

The access stratum signaling may be the MAC layer signaling. The MAC layer message may include a MAC subheader and a MAC control element (CE). The MAC subheader includes an identifier predefined in a protocol, and indicates that the MAC layer message is a control message for adjustment of data transmission. The MAC CE includes content indicated by the first information and the information that indicates the logical channel for transmitting the uplink data burst, for example, the identifier of the logical channel for transmitting the uplink data burst.

The access stratum signaling may be RRC layer signaling, for example, an RRC reconfiguration message or a downlink information transfer (DLInformationTransfer) message. The RRC layer signaling includes adjustment content indicated by the first information and the information that indicates the logical channel for transmitting the uplink data burst, for example, the identifier of the logical channel for transmitting the uplink data burst.

The access stratum signaling may be a PDCP protocol data unit (PDU). The PDCP PDU includes a first field that indicates that the PDCP PDU is a control PDU, a second field that indicates a PDU type (for example, indicating the adjustment time, indicating the maximum peak rate, or indicating the maximum data burst volume or the maximum data volume of the uplink data burst in the periodicity), and a third field that indicates content of the first information. The first field and the second field may be combined into a same field.

The access stratum signaling may be downlink control information (DCI) carried on a physical downlink control channel. The DCI carries content indicated by the first information and the information that indicates the logical channel for transmitting the uplink data burst, for example, the identifier of the logical channel for transmitting the uplink data burst. The terminal-side device may obtain, by blindly detecting the DCI, the content indicated by the first information.

S602: The terminal-side device adjusts the data transmission of the uplink data burst based on the first information.

Optionally, the terminal-side device receives the first information at the access stratum, may determine the logical channel for transmitting the uplink data burst, determine an application layer function specifically corresponding to the logical channel at the application layer, and notify (for example, by using an RIL protocol layer in an operating system layer) the application layer function of the first information, to adjust the data transmission of the uplink data burst. The application layer function is an application program used by the terminal-side device to process the uplink data burst.

It is assumed that the adjustment time in S601 is absolute time, the to-be-adjusted uplink data burst notified to the application layer is a latest uplink data burst, and time of arriving at the access stratum of the terminal-side device is a moment t1. If the terminal-side device cannot adjust time of the latest uplink data burst in time, for example, cannot delay the time to the moment t1 in time, or a moment of receiving the first information has exceeded the moment t1, the terminal-side device may determine, based on the moment t1 and the periodicity of the uplink burst, time of a latest uplink data burst to be sent next, to adjust the data transmission of the uplink data burst.

Optionally, the adjustment time, the maximum peak rate, and the maximum data burst volume that are indicated by the first information may all be for staggering, in terms of time, the terminal-side device and a terminal-side device that does not support simultaneous transmission with the terminal-side device or enabling, in a multi-user multiple-input multiple-output MU-MIMO scenario, the terminal-side device and a terminal-side device MIMO-paired with the terminal-side device to simultaneously perform data transmission.

According to the technical solution provided in the second embodiment, the access-network-side device directly notifies, through the access stratum, the terminal-side device of the content indicated by the first information, so that the uplink data burst is adjusted by the terminal-side device. In this solution, the access stratum signaling directly interacts with an operating system of the terminal-side device, so that the solution is simpler and more direct when a network load balancing capability is improved.

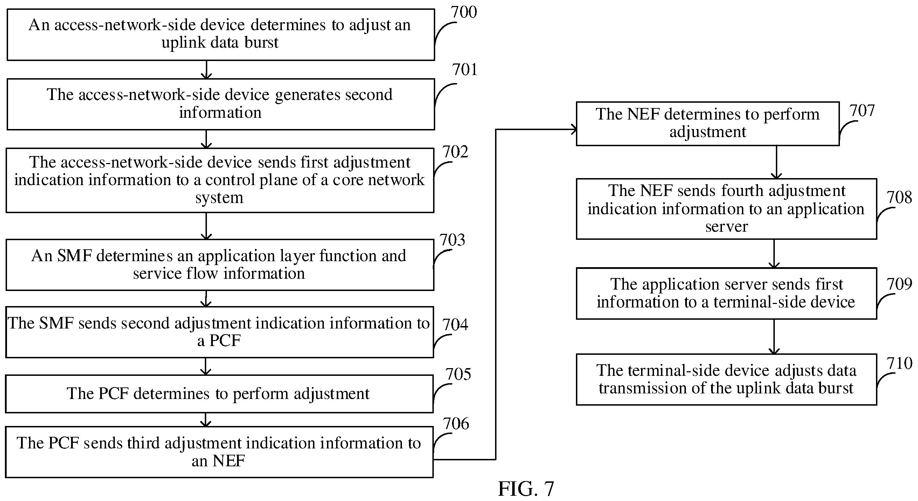

A third embodiment of this application provides a communication processing method for data transmission, as shown in FIG. 7. The method provided in the third embodiment is further detailed descriptions of the first embodiment.

S700: An access-network-side device determines to adjust data transmission of an uplink data burst of an uplink service of a terminal-side device. A specific determining manner may be the same as that in S600.

S701: The access-network-side device generates second information, where the second information indicates at least one of the following reference information determined by the access-network-side device:
(1) reference adjustment time that is determined by the access-network-side device and at which the uplink data burst arrives at an access stratum of the terminal-side device;
(2) a reference maximum peak rate that is determined by the access-network-side device and that the access-network-side device is allowed to provide for the uplink data burst on an air interface or a maximum data volume that is determined by the access-network-side device and that is of the uplink data burst in a periodicity; and
(3) a reference maximum data burst volume that is determined by the access-network-side device and that the access-network-side device can bear for the uplink data burst within a packet delay budget of the air interface.

In S701, the reference information generated by the access-network-side device is expected by the access-network-side device, and another communication node may directly forward the received reference information, or may perform updating based on the received reference information.

Optionally, when the access-network-side device is in a CU-DU split architecture, the second information may be generated by a CU or a DU in the access-network-side device. When the DU generates the second information, the DU may send the second information to the CU through an F1 interface, and then the CU sends the second information to a core network system.

S702: The access-network-side device sends first adjustment indication information to a control plane of the core network system, where the first adjustment indication information indicates to adjust the data transmission of the uplink data burst, and the first adjustment indication information includes the second information.

Optionally, the first adjustment indication information further includes an identifier of a session to which the uplink data burst belongs and an identifier of a QoS flow to which the uplink data burst belongs, to indicate to adjust the data transmission of the uplink data burst that belongs to the QoS flow in the session. The session may be a PDU session to which the uplink data burst belongs, and the QoS flow is the QoS flow to which the uplink data burst belongs. Optionally, the identifier of the session or the identifier of the QoS flow is predefined in a protocol. It indicates, only when the first adjustment indication information includes the protocol-specific identifier of the session or the protocol-specific identifier of the QoS flow, that the data transmission of the uplink data burst that belongs to the QoS flow in the session is allowed to be adjusted. Optionally, the first adjustment indication information further includes a session to which the uplink data burst belongs. If the first adjustment indication information carries an identifier of the session but does not carry an identifier of a QoS flow to which the uplink data burst belongs, it indicates to adjust data transmission of all uplink data bursts in the session.

Optionally, the first adjustment indication information does not include an identifier of a session to which the uplink data burst belongs or an identifier of a QoS flow to which the uplink data burst belongs. In a possible implementation, the terminal-side device may determine whether the QoS flow to which the uplink data burst belongs or the session to which the uplink data burst belongs is predefined in a protocol. If yes, it indicates that the data transmission of the uplink data burst is allowed to be adjusted; or if no, it indicates that the data transmission of the uplink data burst is not allowed to be adjusted. In another possible implementation, the terminal-side device determines whether a maximum peak rate of the data transmission of the uplink data burst, the maximum data volume of the uplink data burst in the periodicity, or a maximum data burst volume within the packet delay budget on the air interface exceeds a preset threshold. If yes, it indicates that the data transmission of the uplink data burst is allowed to be adjusted; or if no, it indicates that the data transmission of the uplink data burst is not allowed to be adjusted.

The following provides descriptions by using an example in which the control plane of the core network system includes an SMF and a PCF.

The first adjustment indication information may be carried in a message such as a PDU session resource notification transmission message or a PDU session resource modification indication message between the access-network-side device and the SMF.

S703: The SMF determines, based on the first adjustment indication information, an application layer function corresponding to the uplink data burst at an application layer of the terminal-side device, and service flow information (for example, including IP quintuplets: a source IP address, a destination IP address, a source port, a destination port, and a used protocol type) of the uplink data burst.

Optionally, the SMF receives the first adjustment indication information via an AMF.

S704: The SMF sends second adjustment indication information to the PCF, where the second adjustment indication information indicates to adjust the data transmission of the uplink data burst.

The second adjustment indication information may include at least one of the following: an identifier of the terminal-side device, an identifier of the application layer function, and the service flow information of the uplink data burst.

The second adjustment indication information may be carried in a measurement control update request message between the SMF and the PCF.

The second adjustment indication information may directly include the second information sent by the access-network-side device, or may include first updated information obtained by updating the second information by the SMF.

The first updated information includes at least one of the following: reference adjustment time that is determined by the SMF and at which the uplink data burst arrives at the access stratum of the terminal-side device, a reference maximum peak rate that is determined by the SMF and that the access-network-side device is allowed to provide for the data burst on the air interface or a maximum data volume that is determined by the SMF and that is in a sending periodicity, or a reference maximum data burst volume that is determined by the SMF and that the access-network-side device can bear for the uplink data burst within the packet delay budget of the air interface.

S705: The PCF determines, based on the second adjustment indication information, to adjust the data transmission of the uplink data burst.

S706: The PCF sends third adjustment indication information to an NEF, where the third adjustment indication information indicates to adjust the data transmission of the uplink data burst.

The third adjustment indication information may include at least one of the following: the identifier of the terminal-side device, the application identifier, and the service flow information of the uplink data burst.

The third adjustment indication information may include the second information, the first updated information, or second updated information obtained by updating the first updated information by the PCF. The second updated information includes at least one of the following: reference adjustment time that is determined by the PCF and at which the uplink data burst arrives at the access stratum of the terminal-side device, a reference maximum peak rate that is determined by the PCF and that the access-network-side device is allowed to provide for the uplink data burst on the air interface or a maximum data volume that is determined by the PCF and that is of the uplink data burst in the periodicity, or a reference maximum data burst volume that is determined by the PCF and that the access-network-side device can bear for the uplink data burst within the packet delay budget of the air interface.

S707: The NEF determines, based on the third adjustment indication information, an application server and the application layer function that corresponds to the uplink data burst.

S708: The NEF sends fourth adjustment indication information to the application server, where the fourth adjustment indication information indicates to adjust the data transmission of the uplink data burst.

Optionally, the NEF may send the fourth adjustment indication information to the application server via an AF entity.

The fourth adjustment indication information may include the second information, the first updated information, the second updated information, or third updated information obtained by updating the second updated information by the NEF. The third updated information includes at least one of the following: reference adjustment time that is determined by the NEF and at which the uplink data burst arrives at the access stratum of the terminal-side device, a reference maximum peak rate that is determined by the NEF and that the access-network-side device is allowed to provide for the uplink data burst on the air interface or a maximum data volume that is determined by the NEF and that is of the uplink data burst in the periodicity, or a reference maximum data burst volume that is determined by the NEF and that the access-network-side device can bear for the uplink data burst within the packet delay budget of the air interface.

Optionally, the AF receives the second information or updated information of the second information, and directly forwards the second information or the updated information of the second information to the application server, or may update the second information or the updated information of the second information and then forward updated information to the application server.

Optionally, the AF receives the second information or updated information of the second information; and may further converge the reference adjustment time that is for the uplink data burst and that is indicated by the second information and reference adjustment time that is for another uplink data burst, converge the maximum peak rate that is for the uplink data burst and that is indicated by the second information and a maximum peak rate that is for the another uplink data burst, converge the maximum data volume that is in the periodicity and for the uplink data burst and that is indicated by the second information and a maximum data volume that is in a periodicity and for the another uplink data burst, and converge the maximum data burst volume that is for the uplink data burst and that is indicated by the second information and a maximum data burst volume that is for the another uplink data burst. The another uplink data burst herein belongs to a same service as the uplink data burst described in first information and the second information, but includes at least one data packet that belongs to a different QoS flow. In this case, the AF may send an aggregation result to the application layer function that processes the service in the application server, so that the application layer function adjusts the entire service.

S709: The application server sends the first information in Embodiment 1 to the terminal-side device via the application layer function.

Alternatively, the PCF sends the third adjustment information to the application server directly or via the AF, without an adjustment step of the NEF. Therefore, S706 to S708 may be replaced with S706': The PCF sends the third adjustment information to the application server directly or via the AF.

Alternatively, the SMF may send the first adjustment indication information to the application server directly or via the AF, without adjustment steps of the PCF and the NEF. Therefore, S704 to S708 may be replaced with S704': The SMF sends the first adjustment information to the application server directly or via the AF.

The first information is determined by the application server based on the received adjustment indication information, and the first information may be the second information, the first updated information, the second updated information, the third updated information, or fourth updated information obtained by updating the second information, the first updated information, the second updated information, or the third updated information by the application server. The fourth updated information includes at least one of the following: adjustment time that is determined by the application server and at which the uplink data burst arrives at the access stratum of the terminal-side device, a maximum peak rate that is determined by the application server and that the access-network-side device is allowed to provide for the data burst on the air interface or a maximum data volume that is determined by the application server and that is in the periodicity, or a maximum data burst volume that is determined by the application server and that the access-network-side device can bear for the uplink data burst within the packet delay budget of the air interface.

Optionally, after the application server sends the first information to the terminal-side device, the application server sends characteristic information, for example, transmission time and the periodicity of the uplink data burst, and a maximum data volume of the uplink data burst in each periodicity, of the uplink service to the access-network-side device via the core network system (for example, via the AF, the NEF, the SMF, or the AMF). S710: The terminal-side device adjusts the data transmission of the uplink data burst based on the first information.

Optionally, the terminal sends adjustment response information to the application server. The adjustment response information may include at least one of the following information: whether to accept adjustment, actual adjustment time at which the uplink data burst arrives at the access stratum of the terminal-side device, an actual maximum peak rate of the uplink data burst or an actual maximum data volume in the periodicity, or an actual maximum data burst volume of the uplink data burst.

Optionally, after the application server receives the adjustment response information, the application server sends the characteristic information, for example, the transmission time and the periodicity of the uplink data burst, and the maximum data volume of the uplink data burst in each periodicity, of the uplink service to the access-network-side device via the core network system (for example, via the AF, the NEF, the SMF, or the AF), to assist the access-network-side device in performing scheduling transmission.

Optionally, the adjustment time, the maximum peak rate, and the maximum data burst volume that are indicated by the first information may all be for staggering, in terms of time, the terminal-side device and a terminal-side device that does not support simultaneous transmission with the terminal-side device or enabling, in a multi-user multiple-input multiple-output MU-MIMO scenario, the terminal-side device and a terminal-side device MIMO-paired with the terminal-side device to simultaneously perform data transmission.

According to the technical solution provided in the third embodiment, the access-network-side device notifies the adjustment of the data transmission of the uplink data burst via each node on the control plane of the core network system and the application server, so that direct interaction between access stratum signaling and an operating system can be reduced, and implementation difficulty of the terminal-side device is further reduced while load balancing is improved.

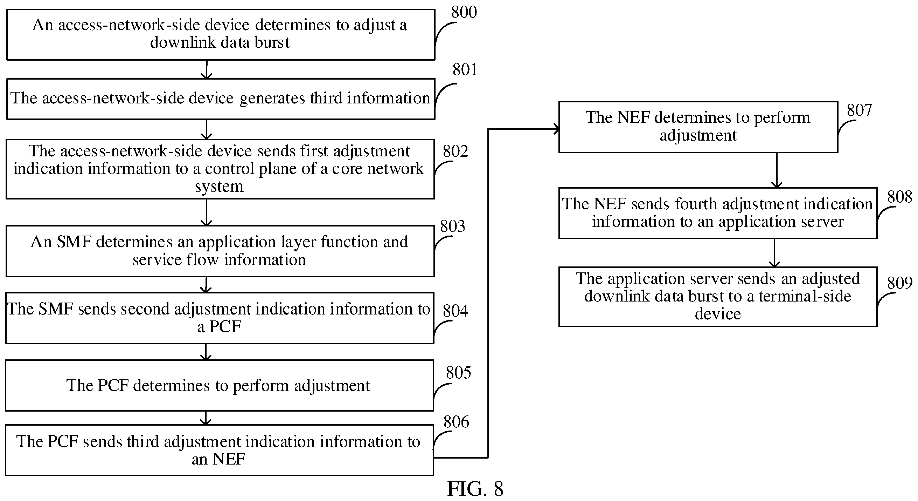

A fourth embodiment of this application provides a communication processing method for data transmission, as shown in FIG. 8. The fourth embodiment is for downlink transmission of a downlink data burst.

S800: An access-network-side device determines to adjust data transmission of a downlink data burst of a downlink service of a terminal-side device.

Optionally, the access-network-side device may collect statistics about characteristic information of the downlink service of the terminal-side device in a time period, for example, transmission time and a periodicity of the downlink service, and a data volume of a downlink data burst in each periodicity. The periodicity of the downlink service may be considered as a periodicity of the downlink data burst in the downlink service. Optionally, the access-network-side device may receive the characteristic information that is of the downlink service and that is sent by a core network system. If a data volume change of the downlink data burst of the terminal-side device exceeds a threshold in a same time period, it is considered that the data transmission of the downlink data burst needs to be adjusted. As described above, in the video field, an I-frame and a P-frame, or a P-frame including an I-slice and a P-frame including no I-slice may both include at least one downlink data burst.

Optionally, when the access-network-side device serves two terminal-side devices, if transmission time of downlink data bursts of the two terminal-side devices are the same or approximate, but downlink requirements, for example, transmission delays, of the two terminal-side devices cannot be ensured due to an inadequate resource, the access-network-side device considers that data transmission of the downlink data burst of either of the two terminal-side devices or data transmission of the downlink data bursts of both of the two terminal-side devices needs to be adjusted.

Optionally, to improve resource utilization, when the access-network-side device simultaneously serves two paired terminal-side devices by using a multi-user multiple-input multiple-output (MU-MIMO) technology, for example, a spatial multiplexing technology, if transmission of downlink data bursts of the two terminal-side devices cannot be implemented on a same downlink channel (for example, a physical downlink shared channel) when arrival time of the downlink data bursts of the two terminal-side devices is different or has a large interval, the access-network-side device considers that data transmission of the downlink data burst of either of the two terminal-side devices or data transmission of the downlink data bursts of both of the two terminal-side devices needs to be adjusted.

Optionally, when two terminal-side devices cannot be served simultaneously because a radio resource of the access-network-side device is limited, if transmission of downlink data bursts of the two terminal-side devices cannot be completed within transmission delay budgets of the downlink data bursts of the two terminal-side devices when arrival time of the downlink data bursts of the two terminal-side devices is the same or has an interval less than a threshold, the access-network-side device determines to adjust data transmission of the downlink data burst of either of the two terminal-side devices or data transmission of the downlink data bursts of both of the two terminal-side devices.

Optionally, the access-network-side device may determine that a maximum peak rate of a downlink data burst of a downlink service, a maximum data volume of the downlink data burst in a periodicity, or a maximum data burst volume exceeds a preset threshold, thereby determining to adjust data transmission of the downlink data burst of the downlink service.

The access-network-side device may determine adjustment time at which the downlink data burst arrives at an access stratum of the terminal-side device. In addition, the access-network-side device may determine a maximum peak rate that the access-network-side device is allowed to provide for the downlink data burst on an air interface or the maximum data volume of the downlink data burst in the periodicity, and a maximum data burst volume that the access-network-side device can bear for the downlink data burst within a packet delay budget of the air interface, to adjust the data transmission of the downlink data burst of the downlink service.

Optionally, the access-network-side device may determine an identifier of a logical channel for transmitting the downlink data burst, a session to which the downlink data burst belongs, and a QoS flow to which the downlink data burst belongs.

S801: The access-network-side device generates third information, where the third information indicates at least one of the following information:
(1) reference adjustment time that is determined by the access-network-side device and at which the downlink data burst is sent from an application server;
(2) a reference maximum peak rate that is determined by the access-network-side device and that the access-network-side device is allowed to provide for the downlink data burst on the air interface or a maximum data volume that is determined by the access-network-side device and that is of the downlink data burst in the periodicity; and
(3) a reference maximum data burst volume that is determined by the access-network-side device and that the access-network-side device can bear for the downlink data burst within the packet delay budget of the air interface.

S802: The access-network-side device sends first adjustment indication information to a control plane of the core network system, where the first adjustment indication information indicates to adjust the data transmission of the downlink data burst.

Optionally, when the access-network-side device is in a CU-DU split architecture, the third information may be generated by a CU or a DU in the access-network-side device. When the DU generates the third information, the DU may send the third information to the CU through an F1 interface, and then the CU sends the third information to the control plane of the core network system.

The first adjustment indication information may include the third information.

Optionally, the first adjustment indication information further includes an identifier of the session to which the downlink data burst belongs and an identifier of the QoS flow to which the downlink data burst belongs, to indicate to adjust the data transmission of the downlink data burst that belongs to the QoS flow in the session. The session may be a PDU session to which the downlink data burst belongs, and the QoS flow is the QoS flow to which the downlink data burst belongs. Optionally, the identifier of the session or the identifier of the QoS flow is predefined in a protocol. It indicates, only when the first adjustment indication information includes the protocol-specific identifier of the session or the protocol-specific identifier of the QoS flow, that the data transmission of the downlink data burst that belongs to the QoS flow in the session is allowed to be adjusted. Optionally, the first adjustment indication information further includes the session to which the downlink data burst belongs. If the first adjustment indication information carries an identifier of the session but does not carry an identifier of the QoS flow to which the downlink data burst belongs, it indicates to adjust data transmission of all downlink data bursts in the session.

Optionally, the first adjustment indication information does not include an identifier of the session to which the downlink data burst belongs or an identifier of the QoS flow to which the downlink data burst belongs. In a possible implementation, the terminal-side device may determine whether the QoS flow to which the downlink data burst belongs or the session to which the downlink data burst belongs is predefined in a protocol. If yes, it indicates that the data transmission of the downlink data burst is allowed to be adjusted; or if no, it indicates that the data transmission of the downlink data burst is not allowed to be adjusted. In another possible implementation, the terminal-side device determines whether a maximum peak rate of the data transmission of the downlink data burst, a maximum data volume of the downlink data burst in the periodicity, or a maximum data burst volume exceeds a preset threshold. If yes, it indicates that the data transmission of the downlink data burst is allowed to be adjusted; or if no, it indicates that the data transmission of the downlink data burst is not allowed to be adjusted.

The following provides descriptions by using an example in which the core network system includes at least an SMF and a PCF.

The first adjustment indication information may be carried in a message such as a PDU session resource notification transmission message or a PDU session resource modification indication message between the access-network-side device and the SMF.

S803: The SMF determines, based on the first adjustment indication information, an application layer function corresponding to the downlink data burst at an application layer of the terminal-side device, and service flow information (for example, including IP quintuplets: a source IP address, a destination IP address, a source port, a destination port, and a used protocol type) of the downlink data burst.

Optionally, the SMF receives the first adjustment indication information via an AMF.

S804: The SMF sends second adjustment indication information to the PCF, where the second adjustment indication information indicates to adjust the data transmission of the downlink data burst.

The second adjustment indication information may include at least one of the following: an identifier of the terminal-side device, an identifier of the application layer function, and the service flow information of the downlink data burst.

The second adjustment indication information may be carried in a measurement control update request message between the SMF and the PCF.

The second adjustment indication information may directly include the third information sent by the access-network-side device, or may include fifth updated information obtained by updating the third information by the SMF.

The fifth updated information includes at least one of the following: reference adjustment time that is determined by the SMF and at which the downlink data burst is sent from the application server, a reference maximum peak rate that is determined by the SMF and that the access-network-side device is allowed to provide for the downlink data burst on the air interface or a maximum data volume that is determined by the SMF and that is of the downlink data burst in the periodicity, or a reference maximum data burst volume that is determined by the SMF and that the access-network-side device can bear for the downlink data burst within the packet delay budget of the air interface.

S805: The PCF determines, based on the second adjustment indication information, to adjust the data transmission of the downlink data burst.

S806: The PCF sends third adjustment indication information to an NEF, where the third adjustment indication information indicates to adjust the data transmission of the downlink data burst.

The third adjustment indication information may include at least one of the following: the identifier of the terminal-side device, the application identifier, and the service flow information of the downlink data burst.

The third adjustment indication information may include the third information, the fifth updated information, or sixth updated information obtained by updating the fifth updated information by the PCF. The sixth updated information includes at least one of the following: reference adjustment time that is determined by the PCF and at which the downlink data burst arrives at the access stratum of the terminal-side device, a reference maximum peak rate that is determined by the PCF and that the access-network-side device is allowed to provide for the downlink data burst on the air interface or a maximum data volume that is determined by the PCF and that is of the downlink data burst in the periodicity, or a reference maximum data burst volume that is determined by the PCF and that the access-network-side device can bear for the downlink data burst within the packet delay budget of the air interface.

S807: The NEF determines, based on the third adjustment indication information, the application server corresponding to the downlink data burst and the application layer function.

S808: The NEF sends fourth adjustment indication information to the application server, where the fourth adjustment indication information indicates to adjust the data transmission of the downlink data burst.

Optionally, the NEF may send the fourth adjustment indication information to the application server via an AF entity.

Optionally, the AF receives the third information or updated information of the third information that is sent by the NEF, and directly forwards the third information or the updated information of the third information to the application server, or may update the third information or the updated information of the third information and then forward updated information to the application server.

Optionally, the AF receives the third information or updated information of the third information; and may further converge the reference adjustment time that is for the downlink data burst and that is indicated by the third information and reference adjustment time that is for another downlink data burst, converge the maximum peak rate that is for the downlink data burst and that is indicated by the third information and a maximum peak rate that is for the another downlink data burst, converge the maximum data volume that is in the periodicity and for the downlink data burst and that is indicated by the third information and a maximum data volume that is in a periodicity and for the another downlink data burst, and converge the maximum data burst volume that is for the downlink data burst and that is indicated by the third information and a maximum data burst volume that is for the another downlink data burst. The another downlink data burst herein belongs to a same service as the downlink data burst described in the foregoing third information, but includes at least one data packet that belongs to a different QoS flow. In this case, the AF may send an aggregation result to the application layer function that processes the service in the application server, so that the application layer function adjusts the entire service.

The fourth adjustment indication information may include the third information, the fifth updated information, the sixth updated information, or seventh updated information, where the seventh updated information is information obtained by updating the third information by the NEF, information obtained by updating the fifth updated information by the NEF, or information obtained by updating the sixth updated information by the NEF. The seventh updated information includes at least one of the following: reference adjustment time that is determined by the NEF and at which the downlink data burst is sent from the application layer server, a reference maximum peak rate that is determined by the NEF and that the access-network-side device is allowed to provide for the downlink data burst on the air interface or a maximum data volume that is determined by the NEF and that is of the downlink data burst in the periodicity, or a reference maximum data burst volume that is determined by the NEF and that the access-network-side device can bear for the downlink data burst within the packet delay budget of the air interface.

S809: The application server adjusts the downlink data burst based on the received adjustment indication information, and sends an adjusted downlink data burst to the terminal-side device via the core network system and the access-network-side device.

Optionally, after S809, the application server sends the characteristic information, for example, transmission time and the periodicity of the downlink burst, and a maximum data volume of the downlink data burst in each periodicity, of the downlink service to the access-network-side device via the core network system (for example, via the AF, the NEF, the SMF, or the AMF).

Alternatively, the PCF sends the third adjustment information to the application server directly or via the AF, without an adjustment step of the NEF. Therefore, S806 to S808 may be replaced with S806': The PCF sends the third adjustment information to the application server directly or via the AF.

Alternatively, the SMF may send the first adjustment indication information to the application server directly or via the AF, without adjustment steps of the PCF and the NEF. Therefore, S804 to S808 may be replaced with S804': The SMF sends the first adjustment information to the application server directly or via the AF.

In S809, for the downlink service, after adjusting the data transmission, the application server may send the downlink data burst of the downlink service to the terminal-side device.

Optionally, after the application server adjusts the data transmission, the application server sends the characteristic information, for example, the transmission time and the periodicity of the downlink service, and the maximum data volume of the uplink data burst in each periodicity, of the downlink service to the access-network-side device via the core network system (for example, via the AF, the NEF, the SMF, or the AMF), to assist the access-network-side device in performing scheduling transmission.

Optionally, the adjustment time, the maximum peak rate, and the maximum data burst volume that are indicated by the third information or the updated information of the third information may all be adjusted by the application server to stagger, in terms of time, the terminal-side device and a terminal-side device that does not support simultaneous transmission with the terminal-side device or enable, in a multi-user multiple-input multiple-output MU-MIMO scenario, the terminal-side device and a terminal-side device MIMO-paired with the terminal-side device to simultaneously perform data transmission.

According to the technical solution provided in the fourth embodiment, the access-network-side device notifies the adjustment of the data transmission of the downlink data burst via various core network systems and application servers, so that direct interaction between access stratum signaling and an operating system can be reduced, and implementation difficulty of the terminal-side device is further reduced while load balancing is improved.

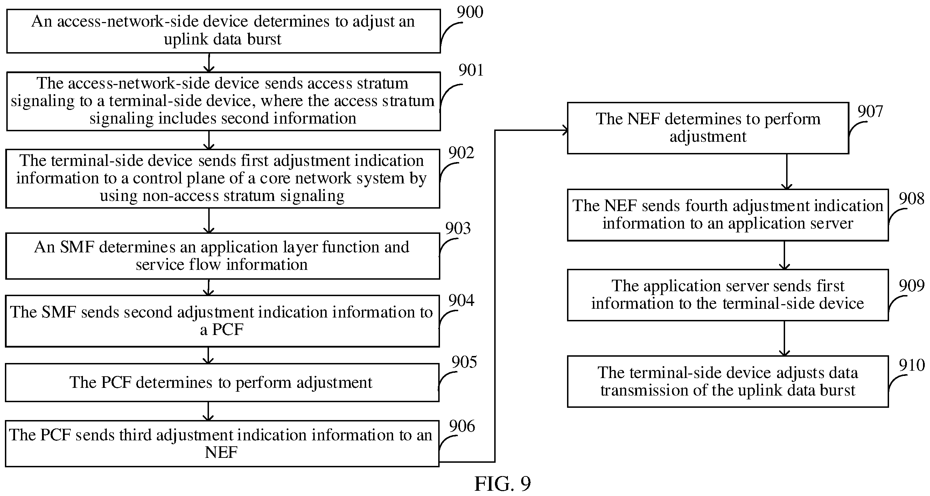

A fifth embodiment of this application provides a communication processing method for data transmission, as shown in FIG. 9. The method provided in the fifth embodiment is further detailed descriptions of the second embodiment and the third embodiment. In the fourth embodiment, data transmission of a data burst is uplink transmission of an uplink data burst.

S900: An access-network-side device determines to adjust data transmission of an uplink data burst of an uplink service of a terminal-side device. A specific determining manner may be the same as that in S600.

S901: The access-network-side device sends access stratum signaling to the terminal-side device, where the access stratum signaling includes second information, and the second information is generated by the access-network-side device.

The access stratum signaling further includes at least one of the following: an identifier of a logical channel for transmitting the uplink data burst, a session to which the uplink data burst belongs, and a QoS flow to which the uplink data burst belongs.

S902: The terminal-side device sends first adjustment indication information to an SMF by using non-access stratum signaling, where the first adjustment indication information indicates to adjust the data transmission of the uplink data burst.

The first adjustment indication information may include the second information. The first adjustment indication information further includes an identifier of the session to which the uplink data burst belongs and an identifier of the QoS flow to which the uplink data burst belongs.

Optionally, the non-access stratum signaling further includes at least one of the following: the identifier of the logical channel for transmitting the uplink data burst, the session to which the uplink data burst belongs, and the QoS flow to which the uplink data burst belongs. The non-access stratum signaling is transparently transmitted by the access-network-side device.

S903: The SMF determines, based on the first adjustment indication information, an application layer function corresponding to the uplink data burst at an application layer of the terminal-side device, and service flow information (for example, including IP quintuplets: a source IP address, a destination IP address, a source port, a destination port, and a used protocol type) of the uplink data burst.

S904: The SMF sends second adjustment indication information to a PCF, where the second adjustment indication information indicates to adjust the data transmission of the uplink data burst.

The second adjustment indication information may include at least one of the following: an identifier of the terminal-side device, an identifier of the application layer function, and the service flow information of the uplink data burst.

The second adjustment indication information may be carried in a measurement control update request message between the SMF and the PCF.

The second adjustment indication information may directly include the second information sent by the access-network-side device, or may include first updated information obtained by updating the second information by the SMF.

The first updated information includes at least one of the following: reference adjustment time that is determined by the SMF and at which the uplink data burst arrives at the access stratum of the terminal-side device, a reference maximum peak rate that is determined by the SMF and that the access-network-side device is allowed to provide for the data burst on an air interface or a maximum data volume that is determined by the SMF and that is of the uplink data burst in a sending periodicity, or a reference maximum data burst volume that is determined by the SMF and that the access-network-side device can bear for the uplink data burst within a packet delay budget of the air interface.

S905: The PCF determines, based on the second adjustment indication information, to adjust the data transmission of the uplink data burst.

S906: The PCF sends third adjustment indication information to an NEF, where the third adjustment indication information indicates to adjust the data transmission of the uplink data burst.

The third adjustment indication information may include at least one of the following: the identifier of the terminal-side device, the application layer identifier, and the service flow information of the uplink data burst.

Optionally, the AF may receive the second information or updated information of the second information, and directly forward the second information or the updated information of the second information to an application server, or may update the second information or the updated information of the second information and then forward updated information to the application server.

Optionally, the AF receives the second information or updated information of the second information; and may further converge the reference adjustment time that is for the uplink data burst and that is indicated by the second information and reference adjustment time that is for another uplink data burst, converge the maximum peak rate that is for the uplink data burst and that is indicated by the second information and a maximum peak rate that is for the another uplink data burst, converge the maximum data volume that is in the periodicity and for the uplink data burst and that is indicated by the second information and a maximum data volume that is in a periodicity and for the another uplink data burst, and converge the maximum data burst volume that is for the uplink data burst and that is indicated by the second information and a maximum data burst volume that is for the another uplink data burst. The another uplink data burst herein belongs to a same service as the uplink data burst described in first information and the second information, but includes at least one data packet that belongs to a different QoS flow. In this case, the AF may send an aggregation result to the application layer function that processes the service in the application server, so that the application layer function adjusts the entire service.

The third adjustment indication information may include the second information, the first updated information, or second updated information obtained by updating the first updated information by the PCF. The second updated information includes at least one of the following: reference adjustment time that is determined by the PCF and at which the uplink data burst arrives at the access stratum of the terminal-side device, a reference maximum peak rate that is determined by the PCF and that the access-network-side device is allowed to provide for the uplink data burst on the air interface or a maximum data volume that is determined by the PCF and that is in a sending periodicity, or a reference maximum data burst volume that is determined by the PCF and that the access-network-side device can bear for the uplink data burst within the packet delay budget of the air interface.

S907: The NEF determines, based on the third adjustment indication information, the application server corresponding to the uplink data burst and the application layer function.

S908: The NEF sends fourth adjustment indication information to the application server, where the fourth adjustment indication information indicates to adjust the data transmission of the uplink data burst.

The fourth adjustment indication information may include the second information, the first updated information, the second updated information, or third updated information. The third updated information is information obtained by updating the second information by the NEF, information obtained by updating the first updated information by the NEF, and information obtained by updating the second updated information by the NEF. The third updated information includes at least one of the following: reference adjustment time that is determined by the NEF and at which the uplink data burst arrives at the access stratum of the terminal-side device, a reference maximum peak rate that is determined by the NEF and that the access-network-side device is allowed to provide for the uplink data burst on the air interface or a maximum data volume that is determined by the NEF and that is of the uplink data burst in the periodicity, or a reference maximum data burst volume that is determined by the NEF and that the access-network-side device can bear for the uplink data burst within the packet delay budget of the air interface.

S909: The application server sends the first information in Embodiment 1 to the terminal-side device via the application layer function.

Alternatively, the PCF sends the third adjustment information to the application server directly, without an adjustment step of the NEF. Therefore, S906 to S908 may be replaced with S906': The PCF sends the third adjustment information to the application server.

Alternatively, the SMF may send the first adjustment indication information to the application server directly, without adjustment steps of the PCF and the NEF. Therefore, S904 to S908 may be replaced with S904': The SMF sends the first adjustment information to the application server.

The first information is determined by the application server based on the received adjustment indication information, and the first information may be the second information, the first updated information, the second updated information, the third updated information, or fourth updated information obtained by updating the second information, the first updated information, the second updated information, or the third updated information by the application server. The fourth updated information includes at least one of the following: adjustment time that is determined by the application server and at which the uplink data burst arrives at the access stratum of the terminal-side device, a maximum peak rate that is determined by the application server and that the access-network-side device is allowed to provide for the uplink data burst on the air interface or a maximum data volume that is determined by the application server and that is of the uplink data burst in the periodicity, or a maximum data burst volume that is determined by the application server and that the access-network-side device can bear for the uplink data burst within the packet delay budget of the air interface.

S910: The terminal-side device adjusts the data transmission of the uplink data burst based on the first information.

Optionally, the adjustment time, the maximum peak rate, and the maximum data burst volume that are indicated by the first information may all be for staggering, in terms of time, the terminal-side device and a terminal-side device that does not support simultaneous transmission with the terminal-side device or enabling, in a multi-user multiple-input multiple-output MU-MIMO scenario, the terminal-side device and a terminal-side device MIMO-paired with the terminal-side device to simultaneously perform data transmission.

According to the technical solution provided in the fifth embodiment, the access-network-side device notifies the adjustment of the data transmission of the uplink data burst via the terminal-side device, each node on a control plane of a core network system, and the application server, so that direct interaction between the access stratum signaling and an operating system of a terminal can be reduced, and implementation difficulty of the terminal-side device is further reduced while load balancing is improved.

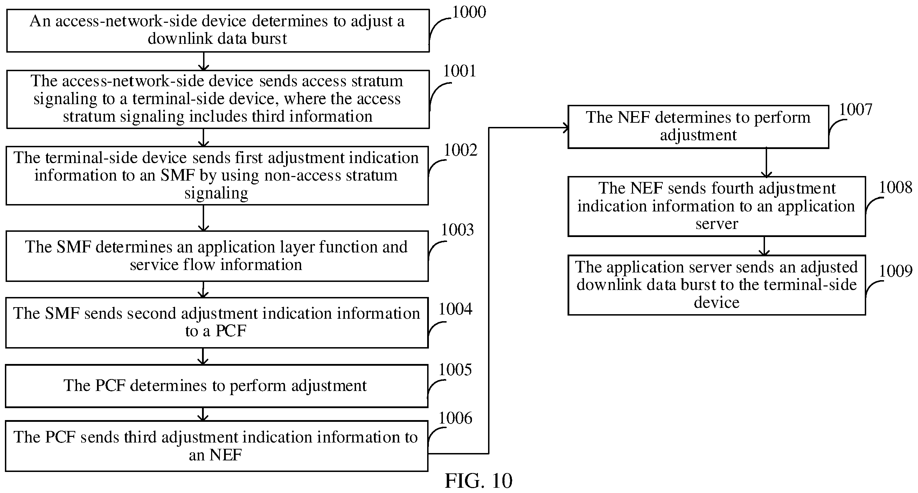

A sixth embodiment of this application provides a communication processing method for data transmission, as shown in FIG. 10. The sixth embodiment is for downlink transmission of a downlink data burst.

S1000: An access-network-side device determines to adjust data transmission of a downlink data burst of a downlink service of a terminal-side device.

S1001: The access-network-side device sends access stratum signaling to the terminal-side device, where the access stratum signaling includes third information, and the third information is generated by the access-network-side device.

The access stratum signaling further includes at least one of the following: an identifier of a logical channel for transmitting the downlink data burst, a session to which the downlink data burst belongs, and a QoS flow to which the downlink data burst belongs.

S1002: The terminal-side device sends first adjustment indication information to an SMF by using non-access stratum signaling, where the first adjustment indication information indicates to adjust the data transmission of the downlink data burst.

The first adjustment indication information may include the third information. The first adjustment indication information further includes an identifier of the session to which the downlink data burst belongs and an identifier of the QoS flow to which the downlink data burst belongs.

Optionally, the non-access stratum signaling further includes at least one of the following: the identifier of the logical channel for transmitting the downlink data burst, the session to which the downlink data burst belongs, and the QoS flow to which the downlink data burst belongs. The non-access stratum signaling is transparently transmitted by the access-network-side device.

S1003: The SMF determines, based on the first adjustment indication information, an application layer function corresponding to the downlink data burst at an application layer of the terminal-side device, and service flow information (for example, including IP quintuplets: a source IP address, a destination IP address, a source port, a destination port, and a used protocol type) of the downlink data burst.

S1004: The SMF sends second adjustment indication information to a PCF, where the second adjustment indication information indicates to adjust the data transmission of the downlink data burst.

The second adjustment indication information may include at least one of the following: an identifier of the terminal-side device, an application layer identifier, and the service flow information of the downlink data burst.

The second adjustment indication information may be carried in a measurement control update request message between the SMF and the PCF.

The second adjustment indication information may directly include the third information sent by the access-network-side device, or may include fifth updated information obtained by updating the third information by the SMF.

The fifth updated information includes at least one of the following: reference adjustment time that is determined by the SMF and at which the downlink data burst is sent from an application server, a reference maximum peak rate that is determined by the SMF and that the access-network-side device is allowed to provide for the downlink data burst on an air interface or a maximum data volume that is determined by the SMF and that is of the downlink data burst in a periodicity, or a reference maximum data burst volume that is determined by the SMF and that the access-network-side device can bear for the downlink data burst within a packet delay budget of the air interface.

S1005: The PCF determines, based on the second adjustment indication information, to adjust the data transmission of the downlink data burst.

S1006: The PCF sends third adjustment indication information to an NEF, where the third adjustment indication information indicates to adjust the data transmission of the downlink data burst.

The third adjustment indication information may include at least one of the following: the identifier of the terminal-side device, the application layer identifier, and the service flow information of the downlink data burst.

Optionally, the AF receives the third information or updated information of the third information that is sent by the NEF, and directly forwards the third information or the updated information of the third information to the application server, or may update the third information or the updated information of the third information and then forward updated information to the application server.

Optionally, the AF receives the third information or updated information of the third information; and may further converge the reference adjustment time that is for the downlink data burst and that is indicated by the third information and reference adjustment time that is for another uplink data burst, converge the maximum peak rate that is for the downlink data burst and that is indicated by the third information and a maximum peak rate that is for the another uplink data burst, converge the maximum data volume that is in the periodicity and for the downlink data burst and that is indicated by the third information and a maximum data volume that is in a periodicity and for the another uplink data burst, and converge the maximum data burst volume that is for the downlink data burst and that is indicated by the third information and a maximum data burst volume that is for the another uplink data burst. The another uplink data burst herein belongs to a same service as the uplink data burst described in the foregoing third information, but includes at least one data packet that belongs to a different QoS flow. In this case, the AF may send an aggregation result to the application layer function that processes the service in the application server, so that the application layer function adjusts the entire service.

The third adjustment indication information may include the third information, the fifth updated information, or sixth updated information. The sixth updated information is information obtained by updating the third information or the fifth updated information by the PCF. The sixth updated information includes at least one of the following: reference adjustment time that is determined by the PCF and at which the downlink data burst is sent from the application server, a reference maximum peak rate that is determined by the PCF and that the access-network-side device is allowed to provide for the downlink data burst on the air interface or a maximum data volume that is determined by the PCF and that is of the downlink data burst in the periodicity, or a reference maximum data burst volume that is determined by the PCF and that the access-network-side device can bear for the downlink data burst within the packet delay budget of the air interface.

S1007: The NEF determines, based on the third adjustment indication information, the application server corresponding to the downlink data burst and the application layer function.

S1008: The NEF sends fourth adjustment indication information to the application server, where the fourth adjustment indication information indicates to adjust the data transmission of the downlink data burst.

The fourth adjustment indication information may include the third information, the fifth updated information, the sixth updated information, or seventh updated information. The seventh updated information includes at least one of the following: reference adjustment time that is determined by the NEF and at which the downlink data burst is sent from the application server, a reference maximum peak rate that is determined by the NEF and that the access-network-side device is allowed to provide for the downlink data burst on the air interface or a maximum data volume that is determined by the NEF and that is of the downlink data burst in the periodicity, or a reference maximum data burst volume that is determined by the NEF and that the access-network-side device can bear for the downlink data burst within the packet delay budget of the air interface.

S1009: The application server adjusts the downlink data burst based on the received adjustment indication information, and sends an adjusted downlink data burst to the terminal-side device via a core network system and the access-network-side device

Alternatively, the PCF sends the third adjustment information to the application server directly, without an adjustment step of the NEF. Therefore, S 1006 to S 1008 may be replaced with S1006': The PCF sends the third adjustment information to the application server directly or via the AF.

Alternatively, the SMF may send the first adjustment indication information to the application server directly or via the AF, without adjustment steps of the PCF and the NEF. Therefore, S1004 to S1008 may be replaced with S1004': The SMF sends the first adjustment information to the application server directly or via the AF.

Optionally, the adjustment time, the maximum peak rate, the maximum data burst volume, and the like that are indicated by the third information may all be used by the application server to stagger, in terms of time, the terminal-side device and a terminal-side device that does not support simultaneous transmission with the terminal-side device or enable, in a multi-user multiple-input multiple-output MU-MIMO scenario, the terminal-side device and a terminal-side device MIMO-paired with the terminal-side device to simultaneously perform data transmission.

According to the technical solution provided in the sixth embodiment, the access-network-side device notifies the adjustment of the data transmission of the downlink data burst via various nodes on a control plane of the core network system and the application server, so that direct interaction between the access stratum signaling and an operating system can be reduced, and implementation difficulty of the terminal-side device is further reduced while load balancing is improved.

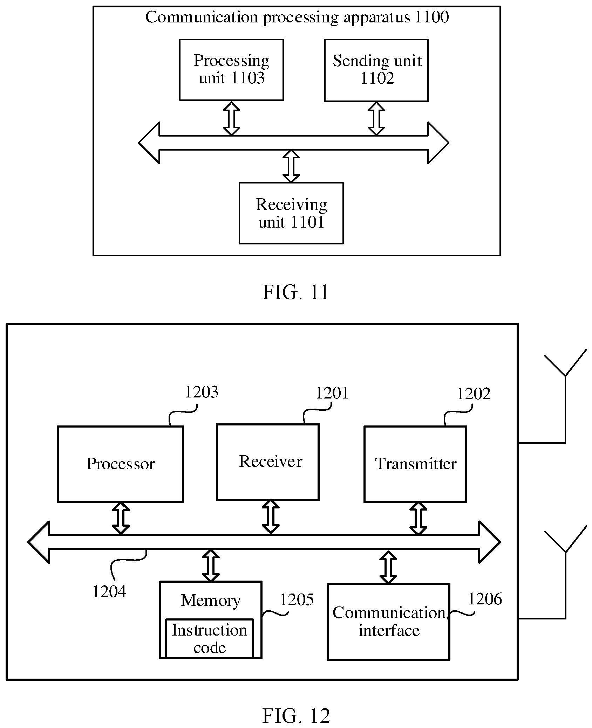

A seventh embodiment of this application provides a communication processing apparatus 1100. In a schematic diagram of a unit structure of a communication processing apparatus shown in FIG. 11, the communication processing apparatus 1100 includes a receiving unit 1101 and a sending unit 1102.

The communication processing apparatus 1100 provided in the seventh embodiment of this application may be the terminal-side device or the access-network-side device in the foregoing method embodiments. Correspondingly, the communication processing apparatus 1100 further includes a processing unit 1103. Specifically, the receiving unit 1101 is configured to perform a receiving action of the terminal-side device or the access-network-side device in the foregoing embodiments, the sending unit 1102 is configured to perform a sending action of the terminal-side device or the access-network-side device, and the processing unit 1103 is configured to perform processing actions such as determining and adjustment of the terminal-side device or the access-network-side device. For details, refer to content described in the foregoing method embodiments.

During specific hardware implementation, in a schematic diagram of a hardware structure of the communication processing apparatus shown in FIG. 12, a function of the receiving unit 1101 may be specifically implemented by a receiver 1201, a function of the sending unit 1102 may be implemented by a transmitter 1202, and a function of the processing unit 1103 may be specifically implemented by a processor 1203. The communication processing apparatus may further include various electronic lines, for example, a bus 1204, a memory 1205, and a communication interface 1206. The memory may include instruction code. When the instruction code is invoked by the processor 1203, the instruction code is for implementing the method steps in the foregoing method embodiments.

The communication interface may be a wired communication interface, a wireless communication interface, or a combination thereof. The wired communication interface may be, for example, an Ethernet interface. The Ethernet interface may be an optical interface, an electrical interface, or a combination thereof. The wireless communication interface may be a wireless local area network interface.

The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like.

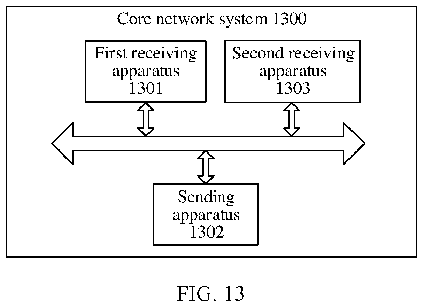

An eighth embodiment of this application further provides a core network system 1300. As shown in FIG. 13, the core network system 1300 includes a first receiving apparatus 1301, a sending apparatus 1302, and a second receiving apparatus 1303.

The first receiving apparatus 1301 and the second receiving apparatus are configured to perform a receiving action of the control plane of the core network system in the foregoing method embodiments. The sending apparatus 1302 is configured to perform a sending action of the control plane of the core network system in the foregoing method embodiments. The first receiving apparatus 1301, the sending apparatus 1302, and the second receiving apparatus 1303 are all SMFs; the first receiving apparatus 1301 is an SMF, the sending apparatus 1302 is a PCF, and the second receiving apparatus 1303 is an SMF or a PCF; or the first receiving apparatus 1301 is an SMF, the sending apparatus 1302 is an NEF, and the second receiving apparatus 1303 is an SMF, a PCF, or an NEF.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-readable storage media (including but not limited to a magnetic disk storage, a CD-ROM, an optical memory, and the like) that include a computer program.

This application is described with reference to the flowcharts and/or block diagrams of the method, the apparatus (system), and the computer program product according to embodiments of this application. It should be understood that computer program instructions may be for implementing each procedure and/or each block in the flowcharts and/or the block diagrams and a combination of procedures and/or blocks in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specified function in one or more procedures in the flowcharts and/or in one or more blocks in the block diagrams.

The computer program instructions may alternatively be stored in a computer-readable memory that can guide a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specified function in one or more procedures in the flowcharts and/or in one or more blocks in the block diagrams.

## Claims

1. A communication processing method for data transmission, applied to a terminal-side device and comprising:
receiving first information, wherein the first information indicates at least one of the following: adjustment time at which an uplink data burst of the terminal-side device arrives at an access stratum of the terminal-side device, a maximum peak rate that an access-network-side device is allowed to provide for the uplink data burst on an air interface, and a maximum data burst volume that the access-network-side device can bear for the uplink data burst within a packet delay budget of the air interface, the uplink data burst comprises at least one data packet that belongs to a same quality of service QoS flow of a same service, and the adjustment time is for staggering, in terms of time, the terminal-side device and a terminal-side device that does not support simultaneous transmission with the terminal-side device or enabling, in a multi-user multiple-input multiple-output MU-MIMO scenario, the terminal-side device and a terminal-side device MIMO-paired with the terminal-side device to simultaneously perform data transmission; and
adjusting data transmission of the uplink data burst based on the first information.

2. The method according to claim 1, wherein the first information is carried in access stratum signaling from the access-network-side device; and
the adjusting data transmission of the uplink data burst based on the first information comprises:
sending the first information to an application layer function for processing the uplink data burst, and adjusting the data transmission of the uplink data burst based on the first information in the application layer function.

3. The method according to claim 1, wherein the first information is carried in application layer signaling sent by an application server of the terminal-side device; and
the adjusting data transmission of the uplink data burst based on the first information comprises:
receiving the application layer signaling at an application layer of the terminal-side device, and adjusting the data transmission of the uplink data burst based on the first information in an application layer function for processing the uplink data burst at the application layer.

4. The method according to claim 3, wherein the method further comprises:
receiving access stratum signaling from the access-network-side device, wherein the access stratum signaling comprises second information, and the second information indicates at least one of the following reference information determined by the access-network-side device: reference adjustment time at which the uplink data burst of the terminal-side device arrives at the access stratum of the terminal-side device, a reference maximum peak rate that the access-network-side device is allowed to provide for the uplink data burst on the air interface, and a reference maximum data burst volume that the access-network-side device can bear for the uplink data burst within the packet delay budget of the air interface; and
sending non-access stratum signaling to a control plane of a core network system, wherein the non-access stratum signaling comprises the second information, and the second information is a reference for determining the first information.

5. A communication processing method for data transmission, applied to an access-network-side device and comprising:
sending access stratum signaling to a terminal-side device, wherein the access stratum signaling comprises first information, the first information indicates at least one of the following: adjustment time at which an uplink data burst of the terminal-side device arrives at an access stratum of the terminal-side device, a maximum peak rate that the access-network-side device is allowed to provide for the uplink data burst on an air interface, and a maximum data burst volume that the access-network-side device can bear for the uplink data burst within a packet delay budget of the air interface, the uplink data burst comprises at least one data packet that belongs to a same quality of service QoS flow of a same service, and the adjustment time is for staggering, in terms of time, the terminal-side device and a terminal-side device that does not support simultaneous transmission with the terminal-side device or enabling, in an MU-MIMO scenario, the terminal-side device and a terminal-side device MIMO-paired with the terminal-side device to simultaneously perform data transmission; and
adjusting data transmission of the uplink data burst based on the first information.

6. A communication processing method for data transmission, applied to an access-network-side device and comprising:
sending access stratum signaling to a terminal-side device, wherein the access stratum signaling comprises second information, the second information indicates at least one of the following reference information determined by the access-network-side device: reference adjustment time at which uplink data burst of the terminal-side device arrives at an access stratum of the terminal-side device, a reference maximum peak rate that the access-network-side device is allowed to provide for the uplink data burst on an air interface, and a reference maximum data burst volume that the access-network-side device can bear for the uplink data burst within a packet delay budget of the air interface, and the uplink data burst comprises at least one data packet that belongs to a same quality of service QoS flow of a same service; and
sending non-access stratum signaling from the terminal-side device to a control plane of a core network system, wherein the non-access stratum signaling comprises the second information.

7. A communication processing method for data transmission, applied to an access-network-side device and comprising:
determining second information, and directly sending the second information to a control plane of a core network system on an interface between the access-network-side device and the control plane of the core network system, wherein the second information indicates at least one of the following reference information determined by the access-network-side device: reference adjustment time at which uplink data burst of a terminal-side device arrives at an access stratum of the terminal-side device, a reference maximum peak rate that the access-network-side device is allowed to provide for the uplink data burst on an air interface, and a reference maximum data burst volume that the access-network-side device can bear for the uplink data burst within a packet delay budget of the air interface, and the uplink data burst comprises at least one data packet that belongs to a same quality of service QoS flow of a same service, wherein
the reference adjustment time is for staggering, in terms of time, the terminal-side device and a terminal-side device that does not support simultaneous transmission with the terminal-side device or enabling, in a multi-user multiple-input multiple-output MU-MIMO scenario, the terminal-side device and a terminal-side device MIMO-paired with the terminal-side device to simultaneously perform data transmission.

8. A communication processing method for data transmission, applied to a control plane of a core network system and comprising:
receiving second information, wherein the second information indicates at least one of the following reference information determined by an access-network-side device: reference adjustment time at which uplink data burst of a terminal-side device arrives at an access stratum of the terminal-side device, a reference maximum peak rate that the access-network-side device is allowed to provide for the uplink data burst on an air interface, and a reference maximum data burst volume that the access-network-side device can bear for the uplink data burst within a packet delay budget of the air interface, and the uplink data burst comprises at least one data packet that belongs to a same quality of service QoS flow of a same service; and
sending the second information or updated information of the second information to an application server of the terminal-side device.

9. The method according to claim 8, wherein the second information is generated and directly sent to the control plane of the core network system by the access-network-side device.

10. The method according to claim 8, wherein the second information is carried in non-access stratum signaling sent by the terminal-side device, and the second information is generated and sent to the terminal-side device by the access-network-side device.

11. The method according to any one of claims 8 to 10, wherein the control plane of the core network system comprises a session management function SMF entity, the updated information of the second information is first updated information, and the first updated information is information obtained by updating the second information by the SMF; and
the SMF sends the second information or the first updated information to the application server directly or via another core network device, wherein the another core network device comprises at least one of a policy control function PCF entity, a network exposure function NEF entity, and an application function AF entity.

12. The method according to any one of claims 8 to 11, wherein the control plane of the core network system comprises a session management function SMF entity and a policy control function PCF entity, the updated information of the second information is first updated information or second updated information, the first updated information is information obtained by updating the second information by the SMF, and the second updated information is information obtained by updating the second information by the PCF or information obtained by updating the first updated information by the PCF; and
the PCF sends the second information, the first updated information, or the second updated information to the application server directly or via another core network device, wherein the another core network device comprises one of a network exposure function NEF entity and an application function AF entity.

13. The method according to any one of claims 8 to 11, wherein the control plane of the core network system comprises a session management function SMF entity, a policy control function PCF entity, and a network exposure function NEF entity, the updated information of the second information is first updated information, second updated information, or third updated information, the first updated information is information obtained by updating the second information by the SMF, the second updated information is information obtained by updating the second information by the PCF or information obtained by updating the first updated information by the PCF, and the third updated information is information obtained by updating the second information by the NEF, information obtained by updating the first updated information by the NEF, or information obtained by updating the second updated information by the NEF; and
the NEF sends the second information, the first updated information, the second updated information, or the third updated information to the application server directly or via an application function AF entity.

14. A communication processing method for data transmission, applied to an access-network-side device and comprising:
sending third information to a control plane of a core network system, wherein the third information indicates at least one of the following reference information determined by the access-network-side device: reference adjustment time at which an application server of a terminal-side device sends a downlink data burst, a reference maximum peak rate that the access-network-side device is allowed to provide for the downlink data burst on an air interface, and a reference maximum data burst volume that the access-network-side device can bear for the downlink data burst within a packet delay budget of the air interface, and the downlink data burst comprises at least one data packet that belongs to a same quality of service QoS flow of a same service;
sending the third information to the control plane of the core network system; and
receiving the downlink data burst sent by the application server of the terminal-side device, and sending the downlink data burst to the terminal-side device.

15. A communication processing method for data transmission, applied to a control plane of a core network system and comprising:
receiving third information from an access-network-side device, wherein the third information indicates at least one of the following reference information determined by the access-network-side device: reference adjustment time at which an application server of a terminal-side device sends a downlink data burst, a reference maximum peak rate that the access-network-side device is allowed to provide for the downlink data burst on an air interface, and a reference maximum data burst volume that the access-network-side device can bear for the downlink data burst within a packet delay budget of the air interface, and the downlink data burst comprises at least one data packet that belongs to a same quality of service QoS flow of a same service; and
sending the third information or updated information of the third information to the application server of the terminal-side device; and
receiving the downlink data burst sent by the application server of the terminal-side device, and sending the downlink data burst to the access-network-side device.

16. A terminal-side device, comprising:
a transceiver unit, configured to receive first information, wherein the first information indicates at least one of the following: adjustment time at which an uplink data burst of the terminal-side device arrives at an access stratum of the terminal-side device, a maximum peak rate that an access-network-side device is allowed to provide for the uplink data burst on an air interface, and a maximum data burst volume that the access-network-side device can bear for the uplink data burst within a packet delay budget of the air interface, the uplink data burst comprises at least one data packet that belongs to a same quality of service QoS flow of a same service, and the adjustment time is for staggering, in terms of time, the terminal-side device and a terminal-side device that does not support simultaneous transmission with the terminal-side device or enabling, in a multi-user multiple-input multiple-output MU-MIMO scenario, the terminal-side device and a terminal-side device MIMO-paired with the terminal-side device to simultaneously perform data transmission; and
a processing unit, configured to adjust data transmission of the data burst based on the first information.

17. The device according to claim 16, wherein the first information is carried in access stratum signaling from the access-network-side device;
the transceiver unit is further configured to send the first information to an application layer function for processing the data burst; and
the processing unit is specifically configured to adjust the data transmission of the uplink data burst based on the first information in the application layer function.

18. The device according to claim 16, wherein the first information is carried in application layer signaling sent by an application server of the terminal-side device;
the transceiver unit is specifically configured to receive the application layer signaling at an application layer of the terminal-side device; and
the processing unit is specifically configured to adjust the data transmission of the data burst based on the first information in an application layer function for processing the uplink data burst at the application layer of the terminal-side device.

19. The device according to claim 18, wherein
the transceiver unit is further configured to receive access stratum signaling from the access-network-side device, wherein the access stratum signaling comprises second information, and the second information indicates at least one of the following reference information determined by the access-network-side device: reference adjustment time at which the uplink data burst of the terminal-side device arrives at the access stratum of the terminal-side device, a reference maximum peak rate that the access-network-side device is allowed to provide for the uplink data burst on the air interface, and a reference maximum data burst volume that the access-network-side device can bear for the uplink data burst within the packet delay budget of the air interface; and
the transceiver unit is further configured to send non-access stratum signaling to a control plane of a core network system, wherein the non-access stratum signaling comprises the second information, and the second information is a reference for determining the first information.

20. An access-network-side device, comprising:
a sending unit, configured to send access stratum signaling to a terminal-side device, wherein the access stratum signaling comprises first information, the first information indicates at least one of the following: adjustment time at which an uplink data burst of the terminal-side device arrives at an access stratum of the terminal-side device, a maximum peak rate that the access-network-side device is allowed to provide for the uplink data burst on an air interface, and a maximum data burst volume that the access-network-side device can bear for the uplink data burst within a packet delay budget of the air interface, the uplink data burst comprises at least one data packet that belongs to a same quality of service QoS flow of a same service, and the adjustment time is for staggering, in terms of time, the terminal-side device and a terminal-side device that does not support simultaneous transmission with the terminal-side device or enabling, in a multi-user multiple-input multiple-output MU-MIMO scenario, the terminal-side device and a terminal-side device MIMO-paired with the terminal-side device to simultaneously perform data transmission; and
a processing unit, configured to adjust data transmission of the uplink data burst based on the first information.

21. An access-network-side device, comprising:
a sending unit, configured to send access stratum signaling to a terminal-side device, wherein the access stratum signaling comprises second information, and the second information indicates at least one of the following reference information determined by the access-network-side device: reference adjustment time at which uplink data burst of the terminal-side device arrives at an access stratum of the terminal-side device, a reference maximum peak rate that the access-network-side device is allowed to provide for the uplink data burst on an air interface, and a reference maximum data burst volume that the access-network-side device can bear for the uplink data burst within a packet delay budget of the air interface; and
a receiving unit, configured to receive non-access stratum signaling from the terminal-side device, wherein the non-access stratum signaling comprises the second information, wherein
the sending unit further sends the non-access stratum signaling from the terminal-side device to a control plane of a core network system.

22. An access-network-side device, comprising:
a processing unit, configured to generate second information; and
a sending unit, configured to directly send the second information to a control plane of a core network system on an interface between the access-network-side device and the control plane of the core network system, wherein the second information indicates at least one of the following reference information determined by the access-network-side device: reference adjustment time at which uplink data burst of a terminal-side device arrives at an access stratum of the terminal-side device, a reference maximum peak rate that the access-network-side device is allowed to provide for the uplink data burst on an air interface, and a reference maximum data burst volume that the access-network-side device can bear for the uplink data burst within a packet delay budget of the air interface, and the uplink data burst comprises at least one data packet that belongs to a same quality of service QoS flow of a same service.

23. A control plane of a core network system, comprising:
a first receiving apparatus, configured to receive second information, wherein the second information indicates at least one of the following reference information determined by an access-network-side device: reference adjustment time at which an uplink data burst of a terminal-side device arrives at an access stratum of the terminal-side device, a reference maximum peak rate that the access-network-side device is allowed to provide for the uplink data burst on an air interface, or a reference maximum data burst volume that the access-network-side device can bear for the uplink data burst within a packet delay budget of the air interface, and the reference adjustment time is used as a reference for staggering, in terms of time, the terminal-side device and a terminal-side device that does not support simultaneous transmission with the terminal-side device or enabling, in a multi-user multiple-input multiple-output MU-MIMO scenario, the terminal-side device and a terminal-side device MIMO-paired with the terminal-side device to simultaneously perform data transmission; and
a sending apparatus, configured to send the second information or updated information of the second information to an application server of the terminal-side device.

24. The system according to claim 23, wherein the second information is generated and directly sent to the control plane of the core network system by the access-network-side device.

25. The system according to claim 23, wherein the second information is carried in non-access stratum signaling sent by the terminal-side device, and the second information is generated and sent to the terminal-side device by the access-network-side device.

26. The system according to any one of claims 23 to 25, wherein the control plane of the core network system comprises a session management function SMF entity, the sending apparatus is the SMF, and the updated information of the second information is first updated information obtained by updating the second information by the SMF; and
the sending apparatus is specifically configured to send the second information or the first updated information to the application server directly or via another core network device, wherein the first updated information is information obtained by updating the second information by the SMF, and the another core network device comprises at least one of a policy control function PCF entity, a network exposure function NEF entity, and an application function AF entity.

27. The system according to any one of claims 23 to 25, wherein the control plane of the core network system comprises a session management function SMF entity and a policy control function PCF entity, the sending apparatus is the PCF, the updated information of the second information is first updated information or second updated information, the first updated information is information obtained by updating the second information by the SMF, and the second updated information is information obtained by updating the second information by the PCF or information obtained by updating the first updated information by the PCF; and
the sending apparatus is specifically configured to send the second information, the first updated information, or the second updated information to the application server directly or via another core network device, wherein the another core network device comprises at least one of a network exposure function NEF entity and an application function AF entity.

28. The system according to any one of claims 23 to 25, wherein the core network system comprises a session management function SMF entity, a policy control function PCF entity, and a network exposure function NEF entity, the sending apparatus is the NEF, the updated information of the second information is first updated information, second updated information, or third updated information, the first updated information is information obtained by updating the second information by the SMF, the second updated information is information obtained by updating the second information by the PCF or information obtained by updating the first updated information by the PCF, and the third updated information is information obtained by updating the second information by the NEF, information obtained by updating the first updated information by the NEF, or information obtained by updating the second updated information by the NEF; and
the sending apparatus is specifically configured to send the second information, the first updated information, the second updated information, or the third updated information to the application server directly or via an application function AF entity.

29. A communication apparatus, comprising a processor and a memory that stores a computer program, wherein the computer program is invoked by the processor, to enable the communication apparatus to implement the method according to any one of claims 1 to 15.

30. A computer-readable storage medium, wherein the storage medium stores a computer program, and the computer program is invoked by a computer to implement the method according to any one of claims 1 to 15.

31. A computer program product, wherein the computer program product comprises a computer program that implements the method according to any one of claims 1 to 15 when being invoked by a computer.
